# EUROPEAN PATENT APPLICATION

(11) **EP 4 722 028 A1**
(43) Date of publication of application: **08.04.2026**
(21) Application number: 24814493.3
(22) Date of filing: 29.05.2024
(51) Int. Cl.: B60L 58/18, H01M 10/615, H05K 5/00, B60L 58/27

(54) **CONTROLLER, ELECTRIC ASSEMBLY, DRIVING SYSTEM, AND VEHICLE**

(30) Priority: 31.05.2023 CN 202310641820
(71) Applicant: BYD Company Limited, Shenzhen, Guangdong 518118 (CN)
(72) Inventor: YU, Fengchuan, Shenzhen, Guangdong 518118 (CN); XUE, Yanchan, Shenzhen, Guangdong 518118 (CN); LI, Qing, Shenzhen, Guangdong 518118 (CN)
(74) Representative: Mathys & Squire
(86) International application number: PCT/CN2024/096107
(87) International publication number: WO 2024/245296

(57) **Abstract**

Disclosed are a controller, an electric powertrain, a drive system, and a vehicle. The controller includes a housing, a power module, and an A-line conductive component. The power module and the A-line conductive component are disposed in the housing. The power module is separately connected to a first end of a three-phase winding of a motor, a positive electrode of a positive battery pack, and a negative electrode of the battery pack. A first end of the A-line conductive component is configured to connect to a midpoint between two sub-battery packs that are connected in series in the battery pack. A second end of the A-line conductive component is configured to connect to a second end of at least one phase winding of the motor.

## Description

This application claims priority to Patent Application No. CN202310641820.8, filed with the China National Intellectual Property Administration on May 31, 2023 and entitled "CONTROLLER, ELECTRIC POWERTRAIN, DRIVE SYSTEM, AND VEHICLE", which is incorporated herein by reference in its entirety.

### TECHNICAL FIELD

This application relates to the field of electric vehicle technologies, and specifically, to a controller, an electric powertrain, a drive system, and a vehicle (electric vehicle).

### BACKGROUND

The existing drive system of an electric vehicle includes a motor, a controller, and a battery pack. The controller is electrically connected to the motor and the battery pack, to transfer electrical energy from the battery pack to the motor, so that the motor drives wheels to work.

Specifically, the controller includes a power module, and positive and negative electrodes of the battery pack are connected to positive and negative electrodes of the controller. A three-phase bridge arm is disposed in the power module. The three-phase bridge arm is connected to one end of a three-phase winding of the motor, so that the battery pack supplies power to the motor through the power module. In some electric vehicles, battery packs includes two sub-battery packs connected in series, and an A line is disposed between the other end of the motor winding and a midpoint between the two sub-battery packs connected in series, so that a battery can self-heat, to work at an appropriate temperature. This clearly increases a quantity of product members and design difficulty. How to improve safety and stability of a drive system is an urgent problem to be resolved.

### SUMMARY

A series of concepts in a simplified form are introduced to the SUMMARY, which are further described in detail in the DESCRIPTION OF EMBODIMENTS. The SUMMARY of this application neither means an attempt to define a key feature and a necessary technical feature of the technical solutions claimed for protection, nor means an attempt to determine the protection scope of the technical solutions claimed for protection.

To at least partially resolve the foregoing problem, a first aspect of this application provides a controller. The controller includes:
a housing;
a power module disposed in the housing, wherein the power module includes:
   three-phase wiring terminals of the power module, configured to separately connect to a first end of a three-phase winding of a motor,
   a positive wiring terminal of the power module, configured to at least indirectly connect to a positive electrode of a battery pack, and
   a negative wiring terminal of the power module, configured to at least indirectly connect to a negative electrode of the battery pack; and
an A-line conductive component disposed in the housing, wherein the A-line conductive component includes a first end of the A-line conductive component and a second end of the A-line conductive component; the first end of the A-line conductive component is configured to at least indirectly connect to a midpoint between a first sub-battery pack and a second sub-battery pack that are connected in series in the battery pack; and the second end of the A-line conductive component is configured to at least indirectly connect to a second end of at least one phase winding of the motor.

Optionally, the controller further includes a capacitor component. The capacitor component includes a first capacitor core, and a first capacitor positive conductive sheet and a capacitor negative conductive sheet that are connected to the first capacitor core.

One end of the first capacitor positive conductive sheet is connected to the positive wiring terminal of the power module, and the other end of the first capacitor positive conductive sheet is configured to at least indirectly connect to the positive electrode of the battery pack.

One end of the capacitor negative conductive sheet is connected to the negative wiring terminal of the power module, and the other end of the capacitor negative conductive sheet is configured to at least indirectly connect to the negative electrode of the battery pack.

Optionally, the capacitor component is provided with an A-line support position, the A-line support position is connected to the first end of the A-line conductive component, and the first end of the A-line conductive component is configured to connect to the battery pack.

Optionally, the housing includes a first connector, and the A-line support position is disposed adjacent to the first connector.

Optionally, the housing includes a first connector, and the first connector is configured for direct or indirect passage of the first end of the A-line conductive component to connect to the battery pack.

Optionally, the capacitor component is provided with the A-line support position, the A-line support position is used to at least indirectly connect, through a connection member, to the midpoint between the first sub-battery pack and the second sub-battery pack that are connected in series, the A-line support position is connected to the first end of the A-line conductive component, and the A-line support position is disposed adjacent to the first connector.

Optionally, the capacitor component further includes a capacitor shell, the A-line conductive component is at least partially disposed in the capacitor shell, and the capacitor shell is an insulating shell.

Optionally, the controller further includes a thermally conductive member, and the thermally conductive member is disposed between the A-line conductive component and an inner wall of the housing of the controller.

Optionally, the controller further includes an insulating member, wherein the insulating member is disposed between the thermally conductive member and the inner wall of the housing.

Optionally, an upper surface of the insulating member is in contact with a lower surface of an upper cover of the housing, a lower surface of the insulating member is in contact with an upper surface of the thermally conductive member, and a lower surface of the thermally conductive member is in contact with the A-line conductive component.

Optionally, the A-line conductive component includes a first A-line conductive member disposed above the capacitor shell, and the thermally conductive member is disposed between the first A-line conductive member and the inner wall of the housing.

Optionally, the insulating member and the thermally conductive member have a same cross-sectional shape.

Optionally, the thermally conductive member is configured as thermally conductive paste.

Optionally, the housing further includes a second opening. The second opening is used for direct or indirect passage of the second end of the A-line conductive component to connect to the motor.

Optionally, the housing further includes a second opening, the second end of the A-line conductive component is disposed adjacent to the second opening, or the second end of the A-line conductive component is disposed at the second opening.

Optionally, the controller further includes a first wiring socket, the first wiring socket is disposed adjacent to the second opening, the first wiring socket includes a first wiring socket three-phase wiring terminal that is connected to the three-phase wiring terminal of the power module, and
a second end of a second A-line conductive member is disposed in the first wiring socket.

Optionally, the A-line conductive component includes:
a first A-line conductive member, wherein the first A-line conductive member has a first end of the first A-line conductive member and a second end of the first A-line conductive member. The first end of the first A-line conductive member is the first end of the A-line conductive component; and
a second A-line conductive member, wherein the second A-line conductive member has a first end of a second A-line conductive member and a second end of the second A-line conductive member, the first end of the second A-line conductive member is connected to the second end of the first A-line conductive member, and the second end of the second A-line conductive member is the second end of the A-line conductive component.

Optionally, the controller further includes a charging socket, configured to connect to a charging device, wherein
the A-line conductive component further includes a third end of the A-line conductive component, and the third end of the A-line conductive component is at least indirectly connected to a positive electrode of the charging device.

Optionally, the charging socket includes a charging positive wiring terminal and a charging negative wiring terminal,
the charging positive wiring terminal is configured to connect to the positive electrode of the charging device, and the charging negative wiring terminal is configured to connect to a negative electrode of the charging device; and
the third end of the A-line conductive component is configured to at least indirectly connect to the charging positive wiring terminal.

Further, the A-line conductive component further includes a third A-line conductive member, and the third A-line conductive member has a first end of the third A-line conductive member and a second end of the third A-line conductive member, wherein
the first A-line conductive member further includes a third end of the first A-line conductive member, wherein the first end of the third A-line conductive member is connected to the third end of the first A-line conductive member, and the second end of the third A-line conductive member is the third end of the A-line conductive component; or
the first end of the third A-line conductive member is connected to the first end of the second A-line conductive member, and the second end of the third A-line conductive member is the third end of the A-line conductive component.

Further, the A-line conductive component further includes a fourth A-line conductive member, wherein
two ends of the fourth A-line conductive member are respectively connected to the third end of the first A-line conductive member and the first end of the third A-line conductive member, to connect the first end of the third A-line conductive member and the third end of the first A-line conductive member; or
two ends of the fourth A-line conductive member are respectively connected to the first end of the second A-line conductive member and the first end of the third A-line conductive member, to connect the first end of the third A-line conductive member and the first end of the second A-line conductive member.

Optionally, the controller further includes:
a sub-positive conductive component, wherein the sub-positive conductive component includes a first end of the sub-positive conductive component and a second end of the sub-positive conductive component, the first end of the sub-positive conductive component is connected to the charging positive wiring terminal; and
a first switching element, wherein a first end of the first switching element is connected to the second end of the sub-positive conductive component, and a second end of the first switching element is connected to the second end of the third A-line conductive member.

Optionally, the sub-positive conductive component includes:
a first positive conductive member, wherein the first positive conductive member includes a first end of the first positive conductive member and a second end of the first positive conductive member, wherein the first end of the first positive conductive member is a first end of the sub-positive conductive component; and
a second positive conductive member, wherein the second positive conductive member includes a first end of the second positive conductive member and a second end of the second positive conductive member, wherein the first end of the second positive conductive member is connected to the second end of the first positive conductive member, and the second end of the second positive conductive member is the second end of the sub-positive conductive component.

Optionally,
the first positive conductive member further includes a third end of the first positive conductive member; and
the controller further includes:
   a second switching element, wherein a first end of the second switching element is connected to the third end of the first positive conductive member; and
   a third positive conductive member, wherein the third positive conductive member includes a first end of the third positive conductive member and a second end of the third positive conductive member, wherein the first end of the third positive conductive member is connected to a second end of the second switching element, and the second end of the third positive conductive member is configured to at least indirectly connect to the positive electrode of the battery pack.

Optionally, the second positive conductive member further includes a third end of the second positive conductive member, and the third end of the second positive conductive member is connected to a capacitor.

Optionally, the controller further includes:
a sub-negative conductive component, wherein the sub-negative conductive component includes a first end of the sub-negative conductive component and a second end of the sub-negative conductive component, the first end of the sub-negative conductive component is connected to the charging negative wiring terminal, and the second end of the sub-negative conductive component is configured to at least indirectly connect to the negative electrode of the battery pack.

Optionally, the sub-negative conductive component includes:
a first negative conductive member, wherein the first negative conductive member includes a first end of the first negative conductive member and a second end of the first negative conductive member, wherein the first end of the first negative conductive member is the first end of the sub-negative conductive component; and
a second negative conductive member, wherein the second negative conductive member includes a first end of the second negative conductive member and a second end of the second negative conductive member, wherein the first end of the second negative conductive member is connected to the second end of the first negative conductive member, and the second end of the second negative conductive member is the second end of the sub-negative conductive component.

Optionally, the second end of the A-line conductive component is configured to at least indirectly connect to a second end of the three-phase winding of the motor.

A second aspect of this application provides an electric powertrain. The electric powertrain includes:
a motor, wherein the motor includes a three-phase winding; and
the controller according to any one of the foregoing technical solutions, wherein
three-phase wiring terminals of the power module are separately connected to the first end of the three-phase winding, and the second end of the A-line conductive component is at least indirectly connected to the second end of the at least one phase winding.

Optionally, the second end of the A-line conductive component is at least indirectly connected to the second end of the three-phase winding.

Optionally,
the motor includes a motor wiring socket, wherein the motor wiring socket includes a motor A-line wiring terminal, an electrical control A-line wiring terminal, a motor three-phase line wiring terminal, and an electrical control three-phase line wiring terminal, the motor A-line wiring terminal is connected to the electrical control A-line wiring terminal, and the motor three-phase line wiring terminal is correspondingly connected to the electrical control three-phase line wiring terminal, wherein
the motor three-phase line wiring terminal is configured to connect to the first end of the three-phase winding, the motor A-line wiring terminal is configured to connect to the second end of the at least one phase winding, the electrical control three-phase line wiring terminal is configured to connect to the three-phase wiring terminal of the power module, and the electrical control A-line wiring terminal is configured to at least indirectly connect to the second end of the A-line conductive component.

Optionally, the controller further includes the first wiring socket, the first wiring socket includes the first wiring socket three-phase wiring terminal, the first wiring socket three-phase wiring terminal is connected to the electrical control three-phase line wiring terminal, and the second end of the A-line conductive component is connected to the electrical control A-line wiring terminal through the first wiring socket.

A third aspect of this application provides a drive system. The drive system includes:
a battery pack, configured to provide power, wherein the battery pack includes a first sub-battery pack and a second sub-battery pack that are connected in series; and
the electric powertrain according to any one of the foregoing technical solutions, wherein
the first end of the A-line conductive component is at least indirectly connected to the midpoint between the first sub-battery pack and the second sub-battery pack that are connected in series, the positive wiring terminal of the power module is at least indirectly connected to the positive electrode of the battery pack, and the negative wiring terminal of the power module is at least indirectly connected to the negative electrode of the battery pack.

Optionally, the drive system further includes a first connection component, configured to connect the battery pack and the controller, wherein the first connection component includes a first A line, wherein one end of the first A line is configured to connect to the first end of the A-line conductive component, and the other end of the first A line is configured to connect to the midpoint between the first sub-battery pack and the second sub-battery pack that are connected in series.

Optionally, the positive wiring terminal of the power module is configured to at least indirectly connect to the positive electrode of the battery pack through a positive direct current bus,
the negative wiring terminal of the power module is configured to at least indirectly connect to the positive electrode of the battery pack through a negative direct current bus, and
the first connection component further includes a part of the positive direct current bus and a part of the negative direct current bus, wherein
the first A line is located between the part of the positive direct current bus and the part of the negative direct current bus.

Optionally, one end that is of the first A line and that is configured to connect to the controller, and one end that is of the part of the positive direct current bus and that is configured to connect to the controller and one end that is of the part of the negative direct current bus and that is configured to connect to the controller jointly pass through the magnetic ring.

A fourth aspect of this application provides a vehicle. The vehicle includes the drive system according to any one of the foregoing technical solutions, wherein the motor is connected to a wheel of the vehicle.

### BRIEF DESCRIPTION OF DRAWINGS

To make advantages of this application easier to understand, this application briefly described above is described in more detail by referring to specific implementations shown in the accompanying drawings. It may be understood that these accompanying drawings describe only typical implementations of this application, and therefore should not be considered as limiting the protection scope of this application. This application is described and explained with additional features and details by reference to the accompanying drawings.

In the accompanying drawings:
FIG. 1 is a three-dimensional diagram of an electric powertrain according to a preferred implementation of this application;
FIG. 2 is a schematic of a circuit principle of a drive system according to a preferred implementation of this application;
FIG. 3 is an exploded view of some elements, a first connection component, and a second connection component of a controller of a drive system according to a preferred implementation of this application;
FIG. 4 is a top view of the electric powertrain shown in FIG. 1 with an upper cover of a controller omitted;
FIG. 5 is a diagram of a connection between a controller of a drive system and a first connection component according to a preferred implementation of this application;
FIG. 6 is a three-dimensional exploded view of the charging socket shown in FIG. 3;
FIG. 7 is a three-dimensional exploded view of the electric powertrain shown in FIG. 1;
FIG. 8 is a cross-sectional side view of a controller according to a preferred implementation of this application;
FIG. 9 is a composition diagram of a specific example of an A-line conductive component of the controller shown in FIG. 3;
FIG. 10 is a composition diagram of another specific example of an A-line conductive component of the controller shown in FIG. 3;
FIG. 11 is a cross-sectional side view of the first contactor shown in FIG. 3;
FIG. 12 is a composition diagram of a sub-positive conductive component of the controller shown in FIG. 3;
FIG. 13 is a composition diagram of a sub-negative conductive component of the controller shown in FIG. 3;
FIG. 14 is a diagram of a capacitor component and a power module of a controller according to a preferred implementation of this application;
FIG. 15 is a three-dimensional top view of the capacitor component shown in FIG. 14;
FIG. 16 is a three-dimensional bottom view of the capacitor component shown in FIG. 14;
FIG. 17 is a three-dimensional exploded view of the capacitor component shown in FIG. 14;
FIG. 18 is a partially enlarged diagram of a connection between the capacitor component and the power module shown in FIG. 14; and
FIG. 19 is an exploded view of a connection between a first connection component and a battery pack of the drive system shown in FIG. 2.

### Reference numerals:

4: second connection component
9: first connection component
9A: first plug
9B: second plug
10: housing
32: second opening
51: capacitor shell
55: capacitor component
56: conductive connection sheet
56A: overlap position
57: second positioning component
58: positive direct current bus wiring terminal
58A: positive direct current bus support position
59: A-line support position
60: negative direct current bus wiring terminal
60A: negative direct current bus support position
62: first fuse wiring terminal
63: second fuse wiring terminal
66: second fuse output terminal
67: first capacitor positive input terminal
68: capacitor negative input terminal
70: negative connection terminal
71: positive connection terminal
72: second capacitor positive input terminal
75: capacitor negative output terminal
76: capacitor insulating member
77: capacitor positive output terminal
79: positive wiring terminal of the power module
79A: sub-positive wiring terminal of the power module
80: insulating member of the power module
81: negative wiring terminal of the power module
81A: sub-negative wiring terminal of the power module
82: first positioning component
83: power module
84: three-phase wiring terminal
91: insulating member
92: second negative conductive member
92A: first end of the second negative conductive member
92B: second end of the second negative conductive member
93: first magnetic ring
94: second magnetic ring
99: first wiring socket
100: Hall
101: first wiring socket three-phase wiring terminal
102: thermally conductive member
115: charging socket
117: third magnetic ring
116A: first magnetic ring socket capacitor
116B: second magnetic ring socket capacitor
122: first switching element/first contactor
123: third A-line conductive member
123A: first end of the third A-line conductive member
123B: second end of the third A-line conductive member
124: second switching element/second contactor
125: first positive conductive member
125A: first end of the first positive conductive member
125B: second end of the first positive conductive member
125C: third end of the first positive conductive member
126: first negative conductive member
126A: first end of the first negative conductive member
126B: second end of the first negative conductive member
127: second positive conductive member
127A: first end of the second positive conductive member
127B: second end of the second positive conductive member
127C: third end of the second positive conductive member
128: third positive conductive member
128A: first end of the third positive conductive member
128B: second end of the third positive conductive member
131: fourth A-line conductive member
131A: first end of the fourth A-line conductive member
131B: second end of the fourth A-line conductive member
132: fastening base
133: third fuse
134: first fuse
135: second fuse
136: second A-line conductive member
136A: first end of the second A-line conductive member
136B: second end of the second A-line conductive member
142: motor A-line terminal
143: motor three-phase line terminal
144: motor A-line wiring terminal
145: motor three-phase line wiring terminal
146: motor wiring socket
147: electrical control three-phase line wiring terminal
148: electrical control A-line wiring terminal
166: magnetic ring mounting groove
167: harness clip
168: first ground terminal
169A: first capacitor mounting groove
169B: second capacitor mounting groove
169C: first groove side wall
169D: second groove side wall
170: charging positive wiring terminal
171: charging negative wiring terminal
172: second ground terminal
173: first capacitor
174: second capacitor
176: first A-line conductive member
176A: first end of the first A-line conductive member
176B: second end of the first A-line conductive member
176C: third end of the first A-line conductive member
179: first capacitor core
181: second capacitor core
600: battery pack
609: battery pack socket
601: battery pack A-line copper busbar
602: battery pack positive bus copper busbar
603: battery pack negative bus copper busbar
611: battery pack A-line wiring terminal
612: battery pack positive bus wiring terminal
613: battery pack negative bus wiring terminal
621: first contact of the contactor
622: second contact of the contactor
623A/623B: wiring post
624: moving plate
625: spring
626: connecting shaft
627: stopper
628: coil
629: magnet
700: motor
701: motor winding
800: controller
801: A line
801A: first A line
801B: third Y capacitor
801C: battery pack A-line
803: three-phase bridge arm
804: upper bridge
805: lower bridge
806: second conductive component
807: positive direct current bus
807B: first Y capacitor
808: negative direct current bus
808B: second Y capacitor
809: first socket
810: first connector
811: first A-line wiring terminal/plug A-line wiring terminal
812: second A-line wiring terminal
813: A-line conductor section
814: first A line
821: first positive direct current bus wiring terminal/plug positive direct current bus wiring terminal
822: second positive direct current bus wiring terminal
823: positive direct current bus conductor section
831: first negative direct current bus wiring terminal/plug negative direct current bus wiring terminal
832: second negative direct current bus wiring terminal
833: negative direct current bus conductor section
840: negative conductive component
841: first end of the negative conductive component
842: second end of the negative conductive component
843: sub-negative conductive component
844: first end of the sub-negative conductive component
845: second end of the sub-negative conductive component
850: positive conductive component
851: first end of the positive conductive component
852: second end of positive conductive component
853: sub-positive conductive component
854: first end of the sub-positive conductive component
855: second end of the sub-positive conductive component
860: A-line conductive component
861: first end of the A-line conductive component
862: second end of the A-line conductive component
863: third end of the A-line conductive component
865: additional positive conductive component
866: first end of the additional positive conductive component
867: second end of additional positive conductive component
870: electric powertrain
880: power socket
881: insulating substrate
882: power interface
883: isolation wall
884: power supply module
885: first side of the socket
886: second side of the socket
890: drive system
901: first capacitor positive conductive sheet
902: first capacitor positive conductive sheet body
903: second capacitor positive conductive sheet
904: second capacitor positive conductive sheet body
905: capacitor negative conductive sheet
906: capacitor negative conductive sheet body
911: insulating base
U1: first sub-battery pack
U2: second sub-battery pack

### DESCRIPTION OF EMBODIMENTS

In the following descriptions, a lot of specific details are given to provide a more thorough understanding of this application. However, it will be apparent to those skilled in the art that this application may be implemented without one or more of these details. In other examples, to avoid confusion with this application, some technical features known in the art are not described.

For a thorough understanding of this application, detailed descriptions are provided in the following descriptions. It will be understood that these implementations are provided so that disclosure of this application is thorough and complete, and fully conveys the concept of these example implementations to a person of ordinary skill in the art. Clearly, implementation of implementations of this application is not limited to special details familiar to a person skilled in the art. Preferred implementations of this application are described in detail below. However, in addition to these detailed descriptions, this application may have other implementations.

Ordinal numbers such as "first" and "second" referenced in this application are merely identifiers and do not have any other meaning, such as a specific order. In addition, for example, the term "first component" does not imply presence of a "second component", and the term "second component" does not imply presence of a "first component". The terms "first", "second", "third", and the like used are not intended to indicate any order, and may be interpreted as names.

It should be noted that the terms "above", "below", "front", "back", "left", "right", "inner", "outer", and similar descriptions in this application are merely for description purposes, but are not intended to limit this application.

This application provides a capacitor component used for a controller, a magnetic ring socket component, a controller that includes the capacitor component and/or the magnetic ring socket component and that is configured to control at least a motor, an electric powertrain including the controller, a drive system including the electric powertrain, and a vehicle including the drive System. It may be understood that the vehicle according to this application is an electric vehicle.

Example implementations of this application are now described in more detail with reference to the accompanying drawings.

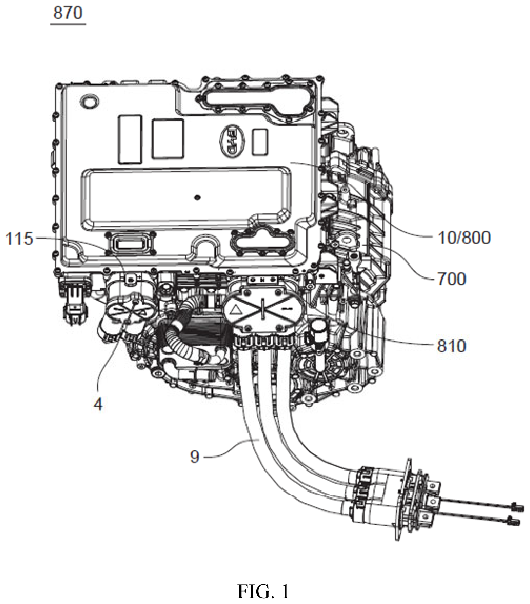

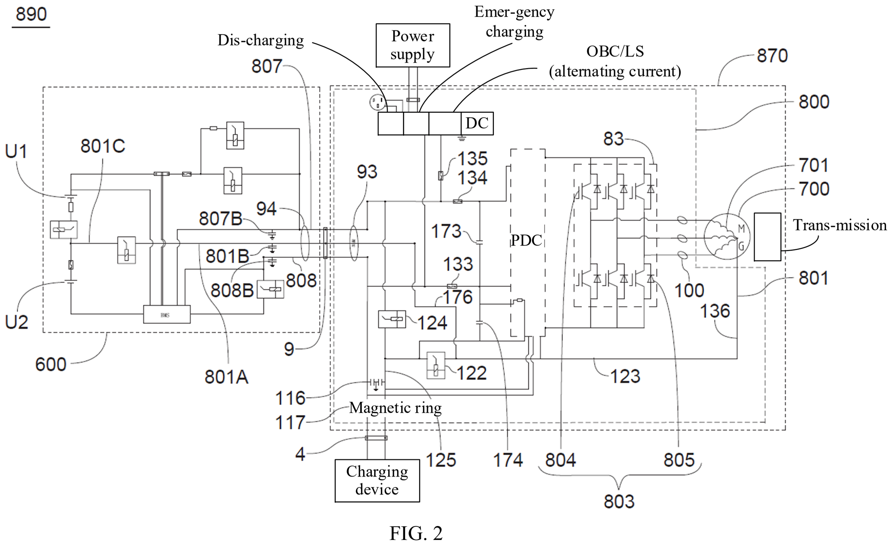

As shown in FIG. 1, in a preferred implementation, an electric powertrain 870 according to this application includes a controller 800 and a motor 700 according to a preferred implementation of this application. As shown in FIG. 2, in a preferred implementation, a drive system 890 according to this application includes a battery pack 600 and the electric powertrain 870 according to a preferred implementation of this application. The controller 800 is connected to a charging device (for example, a charger or a power distribution box) through a second connection component 4 (for example, a cable lug), and is connected to the battery pack 600 through a first connection component 9 (for example, a cable lug).

The battery pack 600 is configured to store energy and provide power (a power battery), the controller 800 is configured to control the motor 700, and the motor 700 is connected to a wheel of an electric vehicle, to drive the wheel to rotate. The controller 800 is separately connected to the motor 700 and the battery pack 600, to transmit electric energy of the battery pack 600 to the motor 700.

In some embodiments, the controller 800 includes a housing 10. In addition, the housing 10 is provided with a plurality of openings or sockets (connectors), to connect to the motor 700, the battery pack 600, the charging device, and the like through connection cables. For example, a charging socket 115 is disposed in the housing 10, and the second connection component 4 is inserted into the charging socket 115, to connect to the charging device.

In some embodiments, the housing 10 is provided with a first connector 810, and the first connector 810 is configured for insertion of the first connection component 9, to connect to the charging pack 600.

The following briefly describes a working principle of the drive system 890 with reference to FIG. 2.

The motor 700 includes a three-phase winding 701 (inductance).

The controller 800 includes a power module 83. In some embodiments, the power module 83 includes a three-phase bridge arm 803, and each phase bridge arm includes an upper bridge 804 and a lower bridge 805. Each phase bridge arm 803 includes, for example, two power switching transistors connected in series. In some embodiments, the power switching transistors may be IGBTs, and the two power switching transistors form the upper bridge 804 and the lower bridge 805. A first end of the three-phase winding 701 is connected to a midpoint of the three-phase bridge arm 803. It should be noted that, the midpoint of the three-phase bridge arm 803 means an electrical position located between two power switches, and the electrical position is separately connected to both the upper bridge 804 and the lower bridge 805. For example, the electrical position is connected to the upper bridge 804 in one path direction, and is connected to the lower bridge 805 in another path direction. The electrical position is also a connection point between the upper bridge 804 and the lower bridge 805, instead of a midpoint position of the three-phase bridge arm 803.

In some embodiments, the battery pack 600 includes a first sub-battery pack and a second sub-battery pack (U1/U2) that are connected in series, which are respectively denoted as a first sub-battery pack U1 and a second sub-battery pack U2. For example, the battery pack 600 includes a case in which the first sub-battery pack U1 and the second sub-battery pack U2 are disposed. A negative electrode of the first sub-battery pack U1 is connected to a positive electrode of the second sub-battery pack U2. A positive electrode of the first sub-battery pack U1 forms a positive electrode of the battery pack 600, namely, a direct current positive electrode of the first sub-battery pack and the second sub-battery pack that are connected in series (the first sub-battery pack U1 and the second sub-battery pack U2). A negative electrode of the second sub-battery pack U2 forms a negative electrode of the battery pack 600, namely, a direct current negative electrode of the first sub-battery pack and the second sub-battery pack that are connected in series (the first sub-battery pack U1 and the second sub-battery pack U2).

An A line 801 connects a second end of at least one phase winding 701 and a midpoint between the first sub-battery pack U1 and the second sub-battery pack U2. That is, the second end of the at least one phase winding 701 is connected to the midpoint between the first sub-battery pack U1 and the second sub-battery pack U2 through the A line 801. In this application, the A line is a conductor, and may be any one or a combination of the following: a round wire, a flat wire, a cable, a copper busbar, and the like. Similarly, the midpoint between the first sub-battery pack U1 and the second sub-battery pack U2 means an electrical position between the first sub-battery pack U1 and the second sub-battery pack U2. The electrical position is separately connected to both the first sub-battery pack U1 and the second sub-battery pack U2. For example, the electrical position is connected to the first sub-battery pack U1 (for example, the negative electrode of the U1) in one path direction, and is connected to the second sub-battery pack U2 (for example, the positive electrode of the U2) in another path direction.

In some embodiments, the A line 801 connects a second end of the three-phase winding 701 and the midpoint between the first sub-battery pack U1 and the second sub-battery pack U2. That is, the second end of the three-phase winding 701 is connected, through the A line 801, to the midpoint between the first sub-battery pack U1 and the second sub-battery pack U2 that are connected in series.

It will be understood from FIG. 2 that the battery pack 600 includes the first sub-battery pack U1 and the second sub-battery pack U2. In a positive half period of a fundamental wave period, when the upper bridge 804 is turned on and the lower bridge 805 is turned off, the first sub-battery pack U1 discharges, and charges the three-phase winding 701 through the upper bridge 804. When the lower bridge 805 is turned on and the upper bridge 804 is turned off, the three-phase winding 701 charges the second sub-battery pack U2, and then flows through the lower bridge 805 to form a loop. In a negative half period of the fundamental wave period, when the lower bridge 805 is turned on and the upper bridge 804 is turned off, the second sub-battery pack U2 discharges to the three-phase winding 701, and a current flows through the lower bridge 804 to form a loop. When the upper bridge 804 is turned on and the lower bridge 805 is turned off, the three-phase winding 701 freewheels, and charges the first sub-battery pack U1 through the upper bridge 804. The first sub-battery pack and the second sub-battery pack charge and discharge each other, to heat battery internal resistance to implement self-heating of the battery. Therefore, in this application, the A line 801 is also referred to as a heating A line, which extends from the second end of the winding 701 of the motor 600 to the midpoint between the first sub-battery pack U1 and the second sub-battery pack U2 of the battery pack 600.

In some embodiments, the controller 800 further includes a first capacitor 173. The first capacitor 173 may be understood as a bus capacitor. A positive electrode of the first capacitor 173 is connected to a positive direct current bus 807, and a negative electrode of the first capacitor 173 is connected to a negative direct current bus 808.

In some embodiments, the positive direct current bus 807 and the negative direct current bus 808 are jointly connected to a first filter. For example, the first filter may be a magnetic ring 93, which is denoted as a first magnetic ring 93. To better mount the positive direct current bus 807 and the negative direct current bus 808, the positive direct current bus 807 and the negative direct current bus 808 may pass through the first magnetic ring 93.

Referring to FIG. 2, in some embodiments, the filter includes a first Y capacitor 807B, a second Y capacitor 808B, and a third Y capacitor 801B. One end of the first Y capacitor 807B is connected to the positive direct current bus 807, and the other end of the first Y capacitor 807B is grounded. One end of the second Y capacitor 808B is connected to the negative direct current bus 808, and the other end of the second Y capacitor 808B is grounded. One end of the third Y capacitor 801B is connected to the A line 801, and the other end of the third Y capacitor 801B is grounded. The three Y capacitors may be disposed in the housing 10 of the controller 800, or may be disposed in the case of the battery pack 600, or may be disposed in both the housing 10 and the case.

Referring to FIG. 2, when charging the battery pack 600, a charging device is connected to the controller 800, and charges the battery pack 600 through the controller 800. When a charging voltage of the charging device is low (for example, less than 750 V, for example, 470 V), after a charging current enters the controller 800, in some embodiments, a negative charging current flows through a negative electrode of the second connection component 4 and the negative direct current bus 808 to the negative electrode of the battery pack 600. A positive charging current flows through a first switching element 122 (for example, a first contactor), a second A-line conductive member 136, the motor winding 701, the upper bridge 804 of the power module 83, and the positive direct current bus 807 to the positive electrode of the battery pack 600. This charging method can increase the charging voltage and improve charging efficiency.

It will be understood that the winding in the motor 700 and a part of the A line 801 are reused during boost charging. To absorb a ripple current and perform filtering, in some embodiments, during boost charging, to better optimize EMC of the power module, a second capacitor 174 is disposed, and both a negative electrode of the second capacitor 174 and the negative electrode of the first capacitor 173 are connected to a negative electrode of the charging device. When a positive electrode of the charging device is connected to the second A-line conductive member 136, the positive electrode of the charging device is further connected to a positive electrode of the second capacitor 174. In this way, a positive electrode and a negative electrode of direct current charging are connected and conducted to the second capacitor 174. In this way, the battery pack is charged through motor boost, to improve charging efficiency.

In some embodiments, a positive charging conductor and a negative charging conductor are jointly connected to a second filter. For example, the second filter may be a magnetic ring 117, which is denoted as a third magnetic ring 117. To better mount the positive charging conductor and the negative charging conductor, the positive charging conductor and the negative charging conductor pass through the third magnetic ring 117.

In some embodiments, to better optimize EMC of the controller 800, the controller 800 further includes a third filter. The positive charging conductor and the negative charging conductor are jointly connected to the third filter. For example, the third filter may be a pair of Y capacitors 116. The pair of Y capacitors 116 can better filter out common-mode interference.

When the charging voltage of the charging device is high (for example, reaches 750 V), after a charging current enters the controller 800, the negative charging current still flows to the battery pack in a same path. The positive charging current then flows through a second switching element 124 (for example, a second contactor) to the first connection component 9. That is, boost charging is not needed.

Therefore, the controller 800 chooses to turn on the first switching element 122 or the second switching element 124 by monitoring the charging voltage of the charging device, so that the positive charging current reaches the battery pack 600 in different paths. When the first switching element 122 is turned on and the second switching element 124 is turned off, the positive charging current flows through the motor winding 701, and a charging voltage is increased. When the first switching element 122 is turned off and the second switching element 124 is turned on, the positive charging current directly flows to the positive direct current bus 807 of the battery pack 600, and does not flow through the motor winding 701, and the charging voltage maintains an original voltage value.

The positive direct current bus 807 and the negative direct current bus 808 are also collectively referred to as a direct current bus.

In some embodiments, when the battery pack 600 supplies power to the motor 700, a direct current from the battery pack 600 sequentially flows through the direct current bus, the first connection component 9, and the first magnetic ring 93 to the first capacitor 173. The direct current is converted by the power module 83 into an alternating current, and then flows to the motor 700 through an alternating current hall 100, to drive the motor 700.

In some embodiments, a negative current flows through a third fuse 133 before entering the first capacitor 173. To protect boost charging and self-heating circuits, a positive current flows through the first fuse 134 when flowing from the first capacitor 173 to the direct current bus.

In some embodiments, to facilitate easier charging of the vehicle, a power supply module 884 is further disposed in the controller 800, and the power supply module 884 is connected to an external alternating current power supply (for example, a mains electricity, AC 220 V) through an alternating current charging/discharging connector 3. To ensure safety, a second fuse 135 is further disposed between the power supply module 884 and the first capacitor 173.

In this application, that two electrical positions are "at least indirectly connected" means that the two electrical positions are directly connected through a conductor (a direct equipotential connection) or indirectly connected through an electronic element (equivalent to an equipotential connection).

Specific molded products are described in detail below in different embodiments.

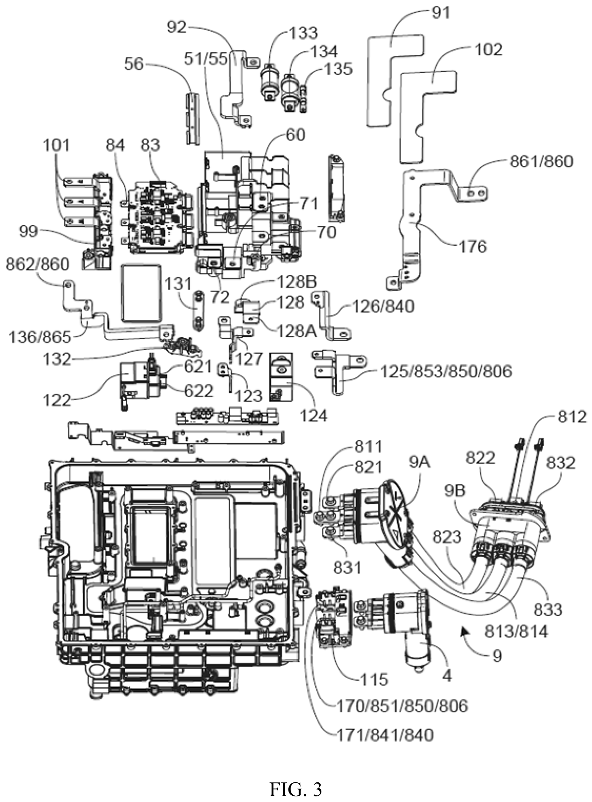

As shown in FIG. 3 to FIG. 5, in some embodiments, the A line 801 connects the midpoint between the first sub-battery pack U1 and the second sub-battery pack U2 and the second end of the at least one phase winding 701 of the motor 700 without passing through the controller 800. For example, one end of the A line 801 is connected to the battery pack 600 after passing through the housing of the motor 700. In this case, the A line 801 is equivalent to being disposed outside the housing 10 of the controller 800. In this embodiment, a design of the A line 801 is simple. However, a part that is of the A line and that is between the housing of the motor 700 and the case of the battery pack 600 needs to be coated, and the part of the A line is long, and a plurality of fasteners need to be separately disposed to fasten the part of the A line. In addition, high-frequency interference of the power module 83 is transmitted to the A line 801 through the motor 700, thereby causing an EMC problem for the entire drive system 890.

In some embodiments, for example, when the three-phase winding 701 of the motor 700 and the power module 83 of the controller 800 need to be reused to implement a boost charging function, when the A line 801 does not pass through the controller 800, a second A line connecting the second end of the at least one phase winding 701 of the motor 700 and the positive charging conductor further needs to be disposed in the controller 800. For example, the second A line may be the second A-line conductive member 136.

To resolve the EMC problem of the entire drive system 890, in some embodiments, a part of the A line 801 is disposed in a fourth filter. For example, the fourth filter is a magnetic ring, which may be denoted as a fourth magnetic ring. The fourth magnetic ring is located at a position that facilitates passage of the A line 801. The fourth magnetic ring functions as a filter to reduce an EMC problem caused by the channel A line 801. In some embodiments, a part of the A line 801 passes through the fourth magnetic ring.

To resolve the problem that the part that is of the A line and that is between the housing of the motor 700 and the case of the battery pack 600 needs to be coated, in some embodiments, a part of the A line 801 is disposed in the housing 10 of the controller 800. In this way, only a part that is of the A line and that is between the case of the battery pack 600 and the housing 10 of the controller 800 needs to be coated, and other parts do not need to be coated. In addition, in these embodiments, the problem that the part that is of the A line and that is between the housing of the motor 700 and the case of the battery pack 600 is long, and the plurality of fasteners need to be separately disposed to fasten the part of the A line is resolved.

In some embodiments, the A line 801 is implemented by using a plurality of interconnected, tangible conductive members (for example, conductors, or copper busbars). In this application, as shown in FIG. 3, for example, the A line 801 located in the housing 10 of the controller 800 is represented as an A-line conductive component 860, including, for example, a first A-line conductive member 176 and the second A-line conductive member 136. For example, the A-line conductive component 860 may further include a third A-line conductive member 123. For example, the A-line conductive component 860 may further include a fourth A-line conductive member 131.

In some embodiments, the A line 801 may be connected in a plurality of manners, or may include a plurality of sections. In this application, a section of the A line 801 is denoted as a first A line. For example, in some embodiments, a first A line 801A may be a section from the midpoint between the first sub-battery pack U1 and the second sub-battery pack U2 that are connected in series to the controller 800 (as shown in FIG. 2, a second end of the first A line 801A is connected to the midpoint between the first sub-battery pack and the second sub-battery pack that are connected in series, and a first end of the first A line 801A is connected to the controller 800, for example, is connected to a connector of the housing 10 of the controller 800); alternatively, a first A line 801C may be an A line in the battery pack 600, which is also referred to as a battery pack A-line (as shown in FIG. 2, a first end of the first A line 801C is connected to the case of the battery pack 600, a second end of the first A line 801C is connected to the midpoint between the first sub-battery pack U1 and the second sub-battery pack U2, and the first A line 801C may be understood as a part of the first A line 801A); alternatively, the first A line 814 may be a section from the battery pack 600 to the controller 800 (as shown in FIG. 3, and a first end of the first A line is connected to the connector of the housing of the controller 800, a second end of the first A line is connected to a connector of the case of the battery pack 600, for example, the first A line is disposed in the first connection component 9, and the first A line 814 may be understood as a part of the first A line 801A).

During heating of the battery pack 600, the A line 801 alternately forms loops with the positive direct current bus 807 and the negative direct current bus 808. Therefore, in some embodiments, at least a part of the A line 801 is located between the positive direct current bus 807 and the negative direct current bus 808. This may facilitate harness arrangement. For example, at least a part of the first A line 801A is located between the positive direct current bus 807 and the negative direct current bus 808.

In some embodiments, inductance of the first A line, the positive direct current bus, and the negative direct current bus is the same. Inductances of the three conductors are the same, so that voltage balance between the A line and the positive electrode of the battery pack and between the A line and the negative electrode of the battery pack can be ensured, improving safety performance. In some embodiments, a part of the positive direct current bus 807, a part of the negative direct current bus 808, and a part of the A line 801 are jointly disposed in the first filter. In some embodiments, the first filter is the first magnetic ring 93, and a part of the positive direct current bus 807, a part of the negative direct current bus 808, and a part of the A line 801 jointly pass through the first magnetic ring 93 (jointly pass through at least one magnetic ring). This can suppress common-mode interference and significantly suppress high-frequency noise. In some embodiments, a part of the first A line and a part of the direct current bus jointly pass through the first magnetic ring 93.

In some embodiments, the first magnetic ring 93 is disposed at least one of the controller 800 and the battery pack 600. For example, the first magnetic ring 93 may be disposed in the housing 10 of the controller 800, or the first magnetic ring 93 may be disposed in the case of the battery pack 600. In some embodiments, a fifth magnetic ring (not shown in the figure) may be further disposed in the case of the battery pack 600, to optimize EMC of the battery pack. When the first A line and the direct current bus need to pass through the housing 10 of the controller 800, the first magnetic ring 93 is disposed in the housing 10. When the first A line and the direct current bus need to pass through the case of the battery pack 600, in some embodiments, the first magnetic ring 93 is disposed in the case.

In some embodiments, only a positive direct current bus wiring terminal and a negative direct current bus wiring terminal on the battery pack 600 are disposed on one side of the battery pack 600. However, the A-line wiring terminal is not disposed on a same side as the positive direct current bus wiring terminal and the negative direct current bus wiring terminal. As a result, the A-line wiring terminal needs to be separately configured with a connection socket, which increases costs.

In some embodiments, in the battery pack positive direct current bus wiring terminal, the battery pack negative direct current bus wiring terminal, and the battery pack A-line wiring terminal on the battery pack 600, the battery pack A-line wiring terminal is not disposed between the battery pack positive direct current bus wiring terminal and the battery pack negative direct current bus wiring terminal. As a result, a part of the A line in the battery pack 600 differs greatly from a part of the positive direct current buses and a part of the negative direct current buses in the battery pack 600. Further, common-mode currents between the part of the A line, the part of the positive direct current bus, and the part of the negative direct current bus in the battery pack 600 are large, causing voltage imbalance between the A line and the positive electrode of the battery pack, and between the A line and the negative electrode of the battery pack. This leads to a safety risk in the whole drive system.

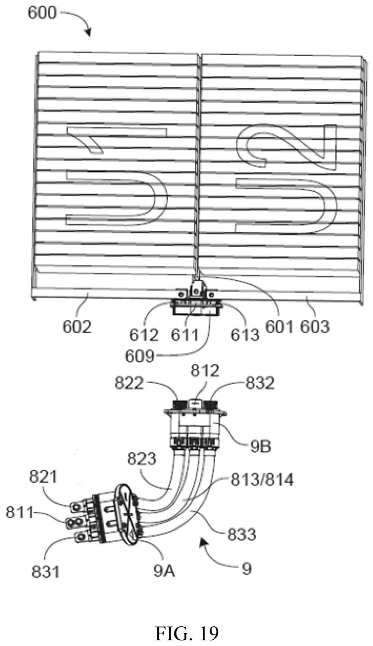

In some embodiments, as shown in FIG. 19, the battery pack 600 includes a battery pack socket 609. To resolve a problem of increased costs due to the separate configuration of the socket for the A-line wiring terminal on one side of the battery pack 600, the battery pack A-line wiring terminal 611, the battery pack positive direct current bus wiring terminal 612, and the battery pack negative direct current bus wiring terminal 613 are disposed in the battery pack socket 609. One end of the battery pack A-line wiring terminal 611 is connected to the midpoint between the first sub-battery pack U1 and the second sub-battery pack U2 through a battery pack A-line copper busbar 601, and the other end is connected to the second end of the at least one phase winding of the motor 700. The battery pack positive direct current bus wiring terminal 612 is connected to the positive electrode of the battery pack 600 through the battery pack positive copper busbar 602. The battery pack negative direct current bus wiring terminal 613 is connected to the negative electrode of the battery pack 600 through the battery pack negative copper busbar 603. The battery pack A-line wiring terminal 611 is disposed between the battery pack positive direct current bus wiring terminal 612 and the battery pack negative direct current bus wiring terminal 613.

As shown in FIG. 3 to FIG. 5, in some embodiments, an A-line wiring terminal (denoted as a second A-line wiring terminal 812) that is configured to connect to one side of the battery pack 600, the positive direct current bus wiring terminal (denoted as a second positive direct current bus wiring terminal 822), and the negative direct current bus wiring terminal (denoted as a second negative direct current bus wiring terminal 832) that are of the first connection component 9 are jointly disposed in a same second plug 9B. That is, the second plug 9B is used to connect to the battery pack 600. For example, as shown in FIG. 19, the second plug 9B is used to connect to the battery pack socket 609. In other words, the battery pack socket 609 is configured for plugging of the second plug 9B. It may be understood that the second A-line wiring terminal 812 is configured to connect to the battery pack A-line wiring terminal 611, the second positive direct current bus wiring terminal 822 is configured to connect to the battery pack positive direct current bus wiring terminal 612, and the second negative direct current bus wiring terminal 832 is configured to connect to the battery pack negative direct current bus wiring terminal 613.

As shown in FIG. 3 to FIG. 5, to resolve the problem of voltage imbalance between the A line and the positive electrode of the battery pack, and between the A line and the negative electrode of the battery pack, in some embodiments, the second A-line wiring terminal 812 is disposed between the second positive direct current bus wiring terminal 822 and the second negative direct current bus wiring terminal 832; in some embodiments, in a direction perpendicular to an extension of the second A-line wiring terminal 812, the second positive direct current bus wiring terminal 822, and the second negative direct current bus wiring terminal 832, the second A-line wiring terminal 812, the second positive direct current bus wiring terminal 822, and the second negative direct current bus wiring terminal 832 at least partially overlap.

As shown in FIG. 3 to FIG. 5, in some embodiments, the housing 10 of the controller 800 is provided with the first connector 810. The first connector 810 is configured to connect to one end of the first connection component 9, and the other end of the first connection component 9 is adapted to be connected to the battery pack 600, so that the controller 800 is connected to the battery pack 600. The A line 801 extends from the motor 700 through the controller 800 to the midpoint between the first sub-battery pack and the second sub-battery pack that are connected in series in the battery pack 600. In some embodiments, the first connection component 9 preferably includes an A-line conductor section 813 corresponding to the first A line 814, a positive direct current bus conductor section 823 corresponding to the positive direct current bus 807, and a negative direct current bus conductor section 833 corresponding to the negative direct current bus 808.

In some embodiments, a first end of the A-line conductor section 813 is at least indirectly connected to the controller 800, and a second end of the A-line conductor section 813 is at least indirectly connected to the midpoint between the first sub-battery pack U1 and the second sub-battery pack U2 that are connected in series. A first end of the positive direct current bus conductor section 823 is at least indirectly connected to the controller 800, and a second end of the positive direct current bus conductor section 823 is at least indirectly connected to the positive electrode (the positive direct current bus 807) of the battery pack 600. A first end of the negative direct current bus conductor section 833 is at least indirectly connected to the controller 800, and a second end of the negative direct current bus conductor section 833 is at least indirectly connected to the negative electrode (the negative direct current bus 808) of the battery pack 600.

In some embodiments, the first end of the A-line conductor section 813 is connected to a first A-line wiring terminal 811. The first A-line wiring terminal 811 is connected to the controller 800. That is, two ends of the first A-line wiring terminal 811 are respectively connected to the controller 800 and the first end of the A-line conductor section 813. In some embodiments, the controller 800 is provided with the A-line support position 59, used to at least indirectly connect to the first end of the A-line conductor section 813 in a detachable manner. The first connector 810 is configured for direct or indirect insertion of the first end of the A-line conductor section 813. In some embodiments, after being inserted into the first connector 810, the first A-line wiring terminal 811 is directly mounted to the A-line support position 59 in a detachable manner. Therefore, the first connector 810 is configured for insertion of the A-line conductor section 813 through the first A-line wiring terminal 811, and the first A-line wiring terminal 811 is detachably connected to the A-line support position 59. The second end of the A-line conductor section 813 is connected to the second A-line wiring terminal 812 (the battery pack A-line wiring terminal), and is connected, through the second A-line wiring terminal 812, to the midpoint between the first sub-battery pack U1 and the second sub-battery pack U2 that are connected in series. It may be understood that the first A-line wiring terminal 811, the A-line conductor section 813, and the second A-line wiring terminal 812 form a section of the A line 801, that is, form the first A line 814. In the controller 800, all electrical portions equipotentially connected to the A-line support position 59 are electrical portions on the A line 801.

In some embodiments, the first end of the positive direct current bus conductor section 823 is connected to a first positive direct current bus wiring terminal 821. The first positive direct current bus wiring terminal 821 is connected to the controller 800. That is, two ends of the first positive direct current bus wiring terminal 821 are respectively connected to the controller 800 and the first end of the positive direct current bus conductor section 823. In some embodiments, the controller 800 is provided with a positive direct current bus support position 58A, used to at least indirectly connect to a first end of the positive direct current bus conductor section 82) in a detachable manner. The positive direct current bus wiring terminal 58 is disposed at a position of the positive direct current bus support position 58A. After being inserted into the first connector 810, the first positive direct current bus wiring terminal 821 is directly connected to the positive direct current bus wiring terminal 58 in a detachable manner. The second end of the positive direct current bus conductor section 823 is connected to the second positive direct current bus wiring terminal 822 (the battery pack positive direct current bus wiring terminal), and is at least indirectly connected to the positive electrode of the battery pack 600 through the second positive direct current bus wiring terminal 822. It may be understood that the first positive direct current bus wiring terminal 821, the positive direct current bus conductor section 823, and the second positive direct current bus wiring terminal 822 form at least a part of the positive direct current bus 807. The positive direct current bus wiring terminal 58 is a positive direct current bus terminal of the controller 800, and is configured to connect to the positive direct current bus 807, namely, the positive electrode of the battery pack 600.

In some embodiments, the first end of the negative direct current bus conductor section 833 is connected to a first negative direct current bus wiring terminal 831. The first negative direct current bus wiring terminal 831 is connected to the controller 800. That is, two ends of the first negative direct current bus wiring terminal 831 are respectively connected to the controller 800 and the first end of the negative direct current bus conductor section 833. For example, the controller 800 is provided with a negative direct current bus support position 60A, used to at least indirectly connect to the first end of the negative direct current bus conductor section 833 in a detachable manner. The negative direct current bus wiring terminal 60 is disposed at a position of the negative direct current bus support position 60A. After being inserted into the first connector 810, the first negative direct current bus wiring terminal 831 is directly connected to the negative direct current bus wiring terminal 60 in a detachable manner. The second end of the negative direct current bus conductor section 833 is connected to the second negative direct current bus wiring terminal 832 (the battery pack negative direct current bus wiring terminal), and is at least indirectly connected to the negative electrode of the battery pack 600 through the second negative direct current bus wiring terminal 832. It may be understood that the first negative direct current bus wiring terminal 831, the negative direct current bus conductor section 833, and the second negative direct current bus wiring terminal 832 form at least a part of the negative direct current bus 808. The negative direct current bus wiring terminal 60 is a negative direct current bus terminal of the controller 800, and is configured to connect to the negative direct current bus 808, namely, the negative electrode of the battery pack 600.

In some embodiments, the first A-line wiring terminal 811, the first positive direct current bus wiring terminal 821, and the first negative direct current bus wiring terminal 831 are located at one end that is of the first connection component 9 and that is configured to connect to the controller 800. The second A-line wiring terminal 812, the second positive direct current bus wiring terminal 822, and the second negative direct current bus wiring terminal 832 are located at the one end that is of the first connection component 9 and that is configured to connect to the battery pack 600.

In some embodiments, the first A-line wiring terminal 811 is located between the first positive direct current bus wiring terminal 821 and the first negative direct current bus wiring terminal 831. In some embodiments, the A-line conductor section 813 is disposed between the positive direct current bus conductor section 823 and the negative direct current bus conductor section 833. In some embodiments, the first connector 810 is disposed on a first socket 809, and the first socket 809 is disposed in the housing 10. The first magnetic ring 93 surrounds the connector 810 at a periphery of the first connector 810.

In some embodiments, a first plug 9A is formed at one end that is of the first connection component 9 and that is configured to connect to the controller 800. The plug 9A is plugged into the connector 810 and the first magnetic ring 93. Therefore, the first A-line wiring terminal 811, the first positive direct current bus wiring terminal 821, and the first negative direct current bus wiring terminal 831 jointly pass through the connector 810 and the first magnetic ring 93. That is, the first A line and the direct current bus jointly pass through the connector 810 and the first magnetic ring 93, that is, the A line 801 and the direct current bus jointly pass through the first magnetic ring 93. In some embodiments, the first A-line wiring terminal 811, the first positive direct current bus wiring terminal 821, and the first negative direct current bus wiring terminal 831 pass through the connector 810 and the first magnetic ring 93 in parallel to each other.

The first A-line wiring terminal 811 may be understood as a plug A-line wiring terminal of the plug 9A. The first positive direct current bus wiring terminal 821 may be understood as a plug positive direct current bus wiring terminal of the plug 9A. The first negative direct current bus wiring terminal 831 may be understood as a plug negative direct current bus wiring terminal of the plug 9A. The first positive direct current bus wiring terminal 821 may be understood as one end that is of the direct current bus and that is configured to connect to the controller 800. Therefore, the first A line and the one end that is of the direct current bus and that is configured to connect to the controller 800 are fastened to the plug 9A.

It may be understood that, a socket may also be disposed on the case on one side of the battery pack 600, wherein a connector is disposed on the socket, and a second magnetic ring 94 (as shown in FIG. 2) is disposed on a periphery of the connector. A plug formed by the second A-line wiring terminal 812, the second positive direct current bus wiring terminal 822, and the second negative direct current bus wiring terminal 832 passes through the second magnetic ring 94, forming a case similar to that in which the plug 9A is plugged into the connector 810. That is, the second positive direct current bus wiring terminal 822, the second A-line wiring terminal 812, and the second negative direct current bus wiring terminal 832 jointly pass through the second magnetic ring 94. The second A-line wiring terminal 812 is located between the second positive direct current bus wiring terminal 822 and the second negative direct current bus wiring terminal 832. The second A-line wiring terminal 812 is disposed in parallel with the second positive direct current bus wiring terminal 822 and the second negative direct current bus wiring terminal 832.

This application may alternatively be configured to allow the A-line conductor section 813, the positive direct current bus conductor section 823, and the negative direct current bus conductor section 833 to jointly pass through a magnetic ring.

In some embodiments, lengths of the A-line conductor section 813, the positive direct current bus conductor section 823, and the negative direct current bus conductor section 833 are substantially the same or the same. For example, lengths of the A-line conductor section 813, the positive direct current bus conductor section 823, and the negative direct current bus conductor section 833 between the first plug 9A and the second plug 9B are the same. In some embodiments, diameters of the A-line conductor section 813, the positive direct current bus conductor section 823, and the negative direct current bus conductor section 833 are substantially the same or the same. This arrangement helps ensure that inductance of the A-line conductor section 813, the positive direct current bus conductor section 823, and the negative direct current bus conductor section 833 is the same.

The A-line conductive component 860 is disposed in the housing 10, so that the controller 800 can be used in both a vehicle having a battery pack self-heating function and a vehicle not having the battery pack self-heating function.

In some implementations, the vehicle has the battery pack self-heating function. In this case, the A line 801 extends from the second end of the motor winding 701 to the midpoint between the first sub-battery pack U1 and the second sub-battery pack U2. Therefore, a second end 862 of the A-line conductive component is at least indirectly connected to the second end of the at least one phase winding 701, and a first end 861 of the A-line conductive component is at least indirectly connected to the midpoint between the first sub-battery pack and the second sub-battery pack that are connected in series. That is, when the second end 862 of the A-line conductive component is at least indirectly connected to the second end of the at least one phase winding 701, the first end 861 of the A-line conductive component is at least indirectly connected to the midpoint between the first sub-battery pack and the second sub-battery pack that are connected in series. Alternatively, when the first end 861 of the A-line conductive component is at least indirectly connected to the midpoint between the first sub-battery pack and the second sub-battery pack that are connected in series, the second end 862 of the A-line conductive component is at least indirectly connected to the second end of the at least one phase winding 701.

In some implementations, the vehicle does not have the battery pack self-heating function. In this case, the two ends of the A-line conductive component 860 of the controller 800 are no longer connected to the battery pack 600 and the motor 700. That is, the second end 862 of the A-line conductive component is not connected to the motor 700, and the first end 861 of the A-line conductive component is not connected to the midpoint between the first sub-battery pack and the second sub-battery pack that are connected in series. In other words, when the second end 862 of the A-line conductive component is not connected to the motor 700, the first end 861 of the A-line conductive component is not connected to the battery pack 600 either. In other words, when the first end 861 of the A-line conductive component is not connected to the battery pack 600, the second end 862 of the A-line conductive component is not connected to the motor 700 either.

The following continues to describe the controller 800 and an embodiment of how the controller 800 is connected to the charging device.

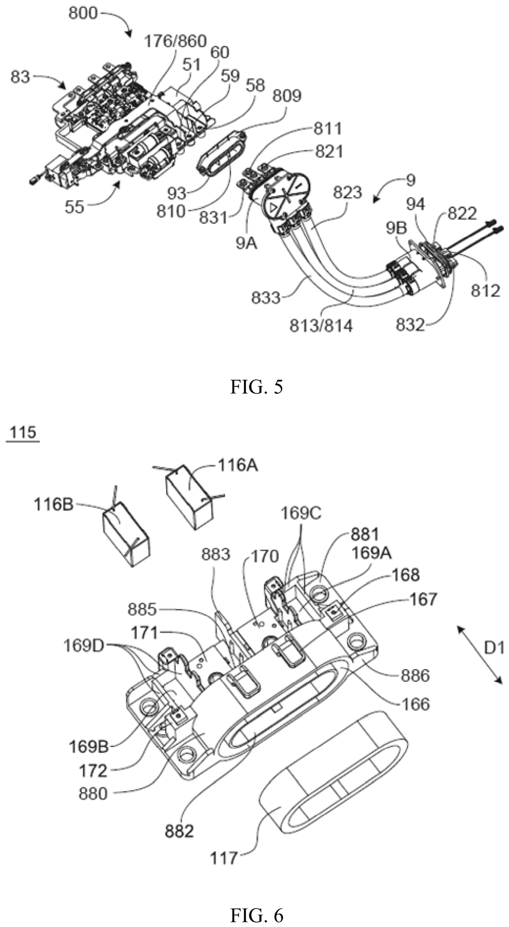

As described above, the controller 800 is connected to the charging device through the second connection component 4. In some embodiments, as shown in FIG. 3 and FIG. 6, the charging socket 115 is disposed in the housing 10 of the controller 800, and a connector of the second connection component 4 is inserted into a power interface 882 (a charging interface) of the charging socket 115. The charging socket 115 includes a charging positive wiring terminal 170 and a charging negative wiring terminal 171.

As shown in FIG. 6, in this application, the charging socket 115 is also referred to as a magnetic ring socket component 115. In some embodiments, the charging socket 115 includes an insulating substrate 881, a first capacitor mounting groove 169A, and a first magnetic ring socket capacitor 116A. In some embodiments, the first capacitor mounting groove 169A is used to accommodate the first magnetic ring socket capacitor 116A. The first magnetic ring socket capacitor 116A is preferably in a cuboid shape. It may be understood that the first magnetic ring socket capacitor 116A has at least three first capacitor side walls. The first capacitor mounting groove 169A has at least three first groove side walls 169C, and the three first groove side walls 169C and the three first capacitor side walls are non-detachably connected in a one-to-one correspondence. For example, the side walls of the first magnetic ring socket capacitor 116A are correspondingly bonded to the three first groove side walls 169C, and the first magnetic ring socket capacitor 116A is securely mounted to the magnetic ring socket component.

As shown in FIG. 6, in some embodiments, the magnetic ring socket component 115 further includes a power socket 880.

As shown in FIG. 6, in some embodiments, the magnetic ring socket component 115 further includes the third magnetic ring 117.

As shown in FIG. 6, in some embodiments, the magnetic ring socket component 115 further includes a second magnetic ring socket capacitor 116B.

As shown in FIG. 6, in some embodiments, the positive wiring terminal 170 that is configured to connect to a positive electrode of a charging power supply, the negative wiring terminal 171 that is configured to connect to a negative electrode of the charging power supply, and a ground terminal that is configured to connect to a ground wire are disposed on the substrate 881. The ground terminal includes a first ground terminal 168 and a second ground terminal 172 short-circuited to each other.

As shown in FIG. 6, in some embodiments, the power socket 880 is disposed on the substrate 881, and is configured to connect to (accommodate) an external power plug (namely, a plug of the charging device). The power socket 880 includes the power interface 882 and a magnetic ring mounting groove 166. The power interface 882 is used to accommodate the external power plug. The power interface 882 passes through the power socket 880 in a first direction D1. The power socket 880 includes a first side 885 of the socket and a second side 886 of the socket that are opposite to each other in the first direction D1, and the external power plug is configured to insert into the power interface 882 from the second side 886 of the socket. That is, the second side 886 of the socket is an outer side facing an external device, and the first side 885 of the socket is an inner side. In some embodiments, the magnetic ring mounting groove 166 is provided in the power socket 880 and surrounds the power interface 882 at a periphery of the power interface 882. In some embodiments, an outer surface of the magnetic ring mounting groove 166 is connected to the substrate 881. In some embodiments, the substrate 881 and the power socket 880 may be integrally formed, for example, by using an injection molding method. In some embodiments, the substrate 881 is parallel to an axis of the power interface 882 (namely, the first direction D1). On one side that is of the magnetic ring socket component 115 and that faces the external power plug, an end face of the power interface 882 is flush with an end face of the substrate 881, or the end face of the power interface 882 protrudes from the end face of the substrate 881. That is, the second side 886 of the socket is flush with the end face of the substrate 881 in the first direction D1, or the second side 886 of the socket protrudes from the substrate 881 in the first direction D1.

As shown in FIG. 6, in some embodiments, the third magnetic ring 117 is disposed in the magnetic ring mounting groove 166, for example, bonded to the magnetic ring mounting groove 166.

As shown in FIG. 6, in some embodiments, the substrate 881 is further provided with a second capacitor mounting groove 169B. The second capacitor mounting groove 169B is used to accommodate the second magnetic ring socket capacitor 116B. The second magnetic ring socket capacitor 116B is preferably in a cuboid shape. It may be understood that the second magnetic ring socket capacitor 116B has at least three second capacitor side walls. The second capacitor mounting groove 169B has at least three second groove side walls 169D, and the three second groove side walls 169C and the three second capacitor side walls are non-detachably connected in a one-to-one correspondence. For example, the side walls of the second magnetic ring socket capacitor 116B are correspondingly bonded to the three second groove side walls 169D. In some embodiments, the first capacitor mounting groove 169A and the second capacitor mounting groove 169B are provided symmetric with respect to the axis of the power interface 880, so that the first magnetic ring socket capacitor 116A and the second magnetic ring socket capacitor 116B are disposed symmetric with respect to the axis of the power interface 882.

As shown in FIG. 6, in some embodiments, the first magnetic ring socket capacitor 116A may alternatively be non-detachably connected to the substrate 881, for example, bonded to the substrate 881. A first capacitor pin of the first magnetic ring socket capacitor 116A is electrically connected to the positive wiring terminal 170, and a second capacitor pin is electrically connected to the ground terminal, for example, the first ground terminal 168. The second magnetic ring socket capacitor 116B may alternatively be non-detachably connected to the substrate 881, for example, bonded to the substrate 881. The first capacitor pin of the second magnetic ring socket capacitor 116B is electrically connected to the negative wiring terminal 171, and the second capacitor pin is electrically connected to the ground terminal, for example, the second ground terminal 172. The first magnetic ring socket capacitor 116A and the second magnetic ring socket capacitor 116B may be configured as Y capacitors. In some embodiments, a length direction of the first magnetic ring socket capacitor 116A is parallel to an axial direction (namely, the first direction D1) of the power interface 882, and/or a length direction of the second magnetic ring socket capacitor 116B is parallel to the axial direction of the power interface 882.

As shown in FIG. 6, in some embodiments, a bottom wall of the magnetic ring mounting groove 166 is provided on the first side 885 of the socket, that is, the magnetic ring mounting groove 166 is not a through groove extending in the first direction D1, and has a blind end on the first side 885 of the socket. In some embodiments, the first magnetic ring socket capacitor 116A and the second magnetic ring socket capacitor 116B are both disposed adjacent to the first side 885 of the socket. In some embodiments, a side wall of the first magnetic ring socket capacitor 116A abuts against the first side 885 of the socket, and a side wall of the second magnetic ring socket capacitor 116B also abuts against the first side 885 of the socket. Therefore, peripheries of both the first magnetic ring socket capacitor 116A and the second magnetic ring socket capacitor 116B are limited, so that the first magnetic ring socket capacitor 116A and the second magnetic ring socket capacitor 116B are securely mounted.

As shown in FIG. 6, in some embodiments, the positive wiring terminal 170 and the negative wiring terminal 171 are also disposed symmetric with respect to the axis of the power interface 882, and the first ground terminal 168 and the second ground terminal 172 are also disposed symmetric with respect to the axis of the power interface 882, so that the entire magnetic ring socket component 115 has a symmetrical structure. For example, the positive wiring terminal 170 and the first ground terminal 168 are respectively located on two sides of the first capacitor mounting groove 169A (namely, the first magnetic ring socket capacitor 116A). The negative wiring terminal 171 and the second ground terminal 172 are respectively located on two sides of the second capacitor mounting groove 169B (namely, the second magnetic ring socket capacitor 116B).

As shown in FIG. 6, in some embodiments, the magnetic ring socket component 115 further includes an isolation wall 883. The isolation wall 883 is disposed on the substrate 881, and protrudes from the substrate 881. The isolation wall 883 is located on a same side of the substrate 881 as the power socket 880. The isolation wall 883 extends in the axial direction of the power interface 882, and is used to isolate a positive electrode and a negative electrode of the external power plug. The positive wiring terminal 170 and the negative wiring terminal 171 are respectively located on two sides of the isolation wall 883. The isolation wall 883 is equivalent to being disposed at a position of a symmetry axis of the magnetic ring socket component 115. It may be understood that the isolation wall 883 is made of an insulating material. In some embodiments, the isolation wall 883 and the substrate 881 are integrally formed. In some embodiments, the isolation wall 883, the substrate 881, and the socket 880 are integrally formed.

As shown in FIG. 6, in some embodiments, the magnetic ring socket component 115 further includes at least one harness clip 167, and the harness clip 167 is disposed on the outer surface of the magnetic ring mounting groove 166, and is configured to clamp a harness.

Because the capacitor 116A, the capacitor 116B, and the magnetic ring 117 are all mounted through bonding, the magnetic ring socket component 115 becomes an integrated charging socket, facilitating automated production.

The magnetic ring socket component 115 is configured for mounting to the housing 10, for example, the substrate 881 is connected to the housing 10, to expose the power interface 882 from the housing 10, so that the second connection component 4 may be inserted into the power interface 882, to implement a connection between the controller 100 and the charging device. In some embodiments, when the drive system 890 is mounted to the vehicle, the axis of the power interface 882 is parallel to an axis of a wheel, so that the plug of the charging device is plugged into a side wall (one side of a door) of the vehicle.

In some embodiments, the first socket 809 and the magnetic ring socket component 115 are disposed on a same side wall of the housing 10, that is, the first connection component 9 and the second connection component 4 are connected to a same side of the housing 10.

The following continues to describe the controller 800 and some embodiments of how the controller 800 is connected to the motor 700.

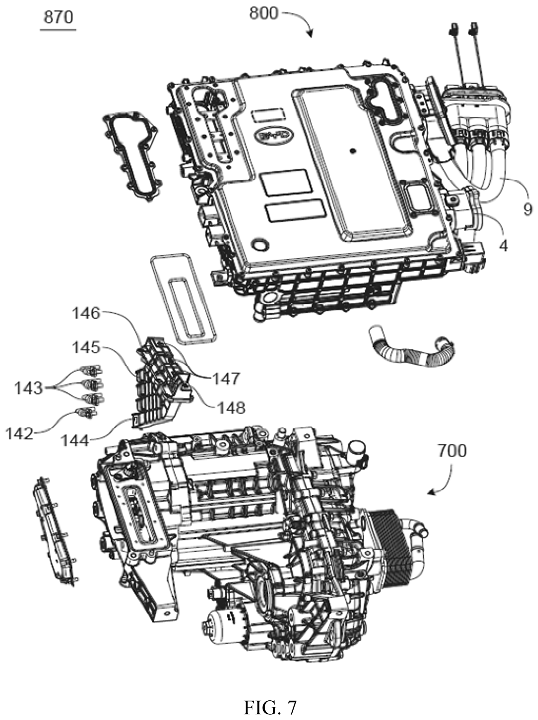

As shown in FIG. 3, a first wiring socket 99 is disposed in the controller 800. As shown in FIG. 7, the motor 700 is disposed with a motor wiring socket 146. The first wiring socket 99 is configured to connect to the motor wiring socket 146, thereby implementing a connection between the controller 800 and the motor 700.

In some embodiments, the connection between the controller 800 and the motor 700 includes a connection of the A line 801 and a connection of the first end of the three-phase winding 701, that is, the controller 800 is separately connected to the first end and the second end of the three-phase winding 701.

In some embodiments, as shown in FIG. 7, the motor wiring socket 146 includes a motor A-line wiring terminal 144, an electrical control A-line wiring terminal 148, a motor three-phase line wiring terminal 145, and an electrical control three-phase line wiring terminal 147. The second end of the three-phase winding 701 is gathered in the motor 700, and is then connected to a motor A-line terminal 142. The motor A-line terminal 142 is connected to the motor A-line wiring terminal 144 of the motor wiring socket 146. In the motor wiring socket 146, the motor A-line wiring terminal 144 is connected to the electrical control A-line wiring terminal 148. The first end of the three-phase winding 701 is connected to a motor three-phase line terminal 143, and the motor three-phase line terminal 143 is connected to the motor three-phase line wiring terminal 145 of the motor wiring socket 146. The motor three-phase line wiring terminal 145 of the motor wiring socket 146 is correspondingly connected to the electrical control three-phase line wiring terminal 147 of the motor wiring socket 146.

As shown in FIG. 3, a first wiring socket three-phase wiring terminal 101 is disposed in the first wiring socket 99. The electrical control three-phase line wiring terminal 147 is configured to connect to the first wiring socket three-phase wiring terminal 101. The electrical control A-line wiring terminal 148 is then connected to the second end 862 (as shown in FIG. 3) of the A-line conductive component 860 of the A line 801 in the controller 800. The second end 862 of the A-line conductive component is disposed in the first wiring socket 99, so that the first wiring socket 99 supports the second end 862 of the A-line conductive component. In addition, the first wiring socket three-phase wiring terminal 101 and the second end 862 of the A-line conductive component are close to each other, facilitating connections to corresponding terminals of the motor 700.

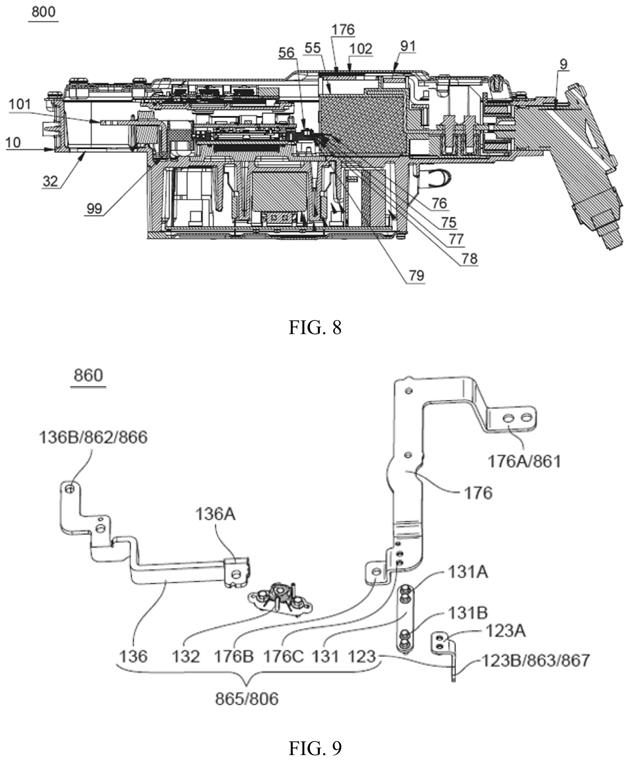

As shown in FIG. 8, the housing 10 is provided with a second opening 32, and the second opening 32 is provided adjacent to the first wiring socket 99, and is used to connect the first wiring socket three-phase wiring terminal 101 and the second end 862 of the A-line conductive component to the motor 700. For example, the motor wiring socket 146 may directly enter an interior of the housing 10 from the second opening 32 and is connected to the terminal at the first wiring socket 99.

The second opening 32 is used for direct or indirect passage of the second end 862 of the A-line conductive component to connect to the motor 700. In this application, that the second end 862 of the A-line conductive component indirectly passes through the second opening 32 means that a current flowing through the second end 862 of the A-line conductive component flows through the second opening 32. The second end 862 of the A-line conductive component is disposed adjacent to the second opening 32, or the second end 32 of the A-line conductive component is disposed at the second opening 32.

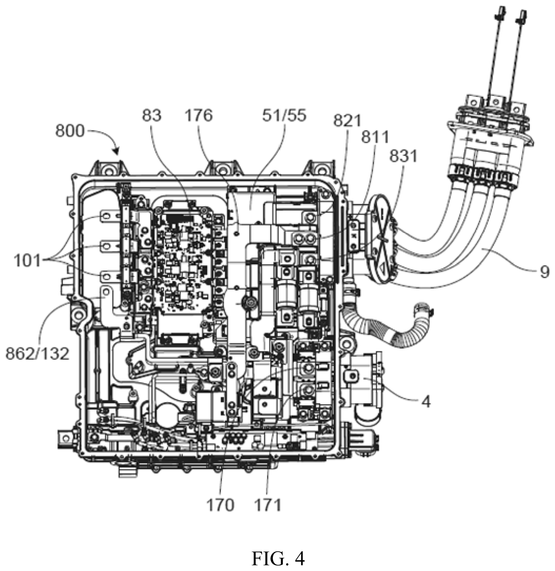

In some embodiments, the first wiring socket three-phase wiring terminal 101 and the second end 862 of the A-line conductive component are disposed side by side (as shown in FIG. 4), and the electrical control three-phase line wiring terminal 147 and the electrical control A-line wiring terminal 148 are disposed side by side.

The following continues to describe some embodiments of the controller 800, in particular, a relationship between the controller 800 and the A line 801.

As shown in FIG. 3, the controller 800 includes the power module 83 and the A-line conductive component 860. The power module 83 and the A-line conductive component 860 are disposed in the housing 10. The A-line conductive component 860 is also a part of the A line 801 in the controller 800.

As shown in FIG. 3 and FIG. 9, the A-line conductive component 860 includes the first end 861 of the A-line conductive component and the second end 862 of the A-line conductive component. The first end 861 of the A-line conductive component is configured to at least indirectly connect to the midpoint between the first sub-battery pack U1 and the second sub-battery pack U2 that are connected in series in the battery pack 600. The second end 862 of the A-line conductive component is used to at least indirectly connect to the second end of the at least one phase winding 701 of the motor 700. In some embodiments, the second end 862 of the A-line conductive component is used to at least indirectly connect to the second end of the three-phase winding 701 of the motor 700.

It may be understood that the first connector 810 is configured for direct or indirect passage of the first end 861 of the A-line conductive component to connect to the battery pack 600. In this application, that the first end 861 of the A-line conductive component indirectly passes through the first connector 810 means that a current flowing through the first end 861 of the A-line conductive component flows through the first connector 810.

In some embodiments, the A-line conductive component includes the first A-line conductive member 176 and the second A-line conductive member 136. The first A-line conductive member 176 has a first end 176A of the first A-line conductive member and a second end 176B of the first A-line conductive member. The first end 176A of the first A-line conductive member is the first end 861 of the A-line conductive component. The second A-line conductive member 136 has a first end 136A of the second A-line conductive member and a second end 136B of the second A-line conductive member. The first end 136A of the second A-line conductive member is connected to the second end 176B of the first A-line conductive member. The second end 136B of the second A-line conductive member is the second end 862 of the A-line conductive component. In some embodiments, the second end 176B of the first A-line conductive member is connected to the first end 136A of the second A-line conductive member through a fastening base 132. The fastening base 132 is generally an insulating member, and is configured to support the first A-line conductive member 176 and the second A-line conductive member 136, thereby reducing shaking of the first A-line conductive member 176 and the second A-line conductive member 136 in the housing 10 of the controller, and improving reliability of the controller 800.

Specifically, as shown in FIG. 3, as described above, the controller 800 is provided with the A-line support position 59, and the A-line support position 59 is used to at least indirectly connect, through a connection member, to the midpoint between the first sub-battery pack U1 and the second sub-battery pack U2 that are connected in series in the battery pack 600. For example, the first end 176A of the first A-line conductive member is fastened and mounted to the A-line support position 59, that is, the first end 861 of the A-line conductive component is fastened to the A-line support position 59, and is connected to the first A-line wiring terminal 811, to connect to the midpoint between the first sub-battery pack U1 and the second sub-battery pack U2 through the A line of the first connection component 9.

With reference to FIG. 2, it will be understood that the controller 800 is connected to the first end of the three-phase winding 701 of the motor 700, and is further connected to the second end of the three-phase winding 701 (namely, an endpoint of the A line in the motor). The second end 136B of the second A-line conductive member is connected to the first wiring socket A-line wiring terminal 802 of the first wiring socket 99, to connect to the second end of the winding 701.

In this way, the drive system 890 connects the motor 700 through the controller 800 to the A line of the battery pack 600.

In some embodiments, the A-line conductive component 860 further includes a third end 863 of the A-line conductive component, and the third end 863 of the A-line conductive component is at least indirectly connected to the charging positive wiring terminal 170. For example, the A-line conductive component 860 further includes the third A-line conductive member 123, wherein the third A-line conductive member 123 is configured to connect the second A-line conductive member 136 and the positive charging conductor. In this embodiment, the third A-line conductive member 123 is mainly used in a working condition of boost charging. This design can reuse the second A-line conductive member 136, reduce a part of copper busbars, improve an integration level of the controller 800, and reduce costs.

In some embodiments, as shown in FIG. 9, the third A-line conductive member 123 has a first end 123A of the third A-line conductive member and a second end 123B of the third A-line conductive member. The first A-line conductive member 176 further includes a third end 176C of the first A-line conductive member. The third end 176C of the first A-line conductive member is preferably disposed close to the second end 176B of the first A-line conductive member. The first end 123A of the third A-line conductive member is connected to the third end 176C of the first A-line conductive member. The second end 123B of the third A-line conductive member is the third end 863 of the A-line conductive component. In some embodiments, the A-line conductive component 860 further includes the fourth A-line conductive member 131. The fourth A-line conductive member 131 includes a first end 131A of the fourth A-line conductive member and a second end 131B of the fourth A-line conductive member. The two ends of the fourth A-line conductive member 131 are respectively connected to the third end 176C of the first A-line conductive member and the first end 123A of the third A-line conductive member.

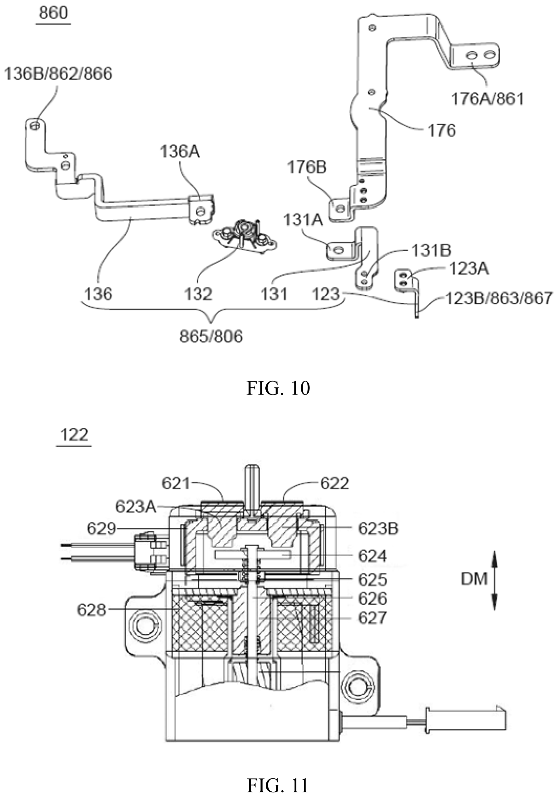

In other embodiments, as shown in FIG. 10, the first end 123A of the third A-line conductive member is connected to the first end 136A of the second A-line conductive member. The two ends of the fourth A-line conductive member 131 are respectively connected to the first end 136A of the second A-line conductive member and the first end 123A of the third A-line conductive member, to connect the first end 123A of the third A-line conductive member and the first end 136A of the second A-line conductive member.

In some embodiments, the first switching element 122 is disposed in the housing 10, and a second end of the first switching element 122 is connected to the second end 123B of the third A-line conductive member. The second end of the first switching element 122 is connected to the charging positive wiring terminal 170. Therefore, the third end 863 of the A-line conductive component is connected to the charging positive wiring terminal 170 through the first switching element 122.

In some embodiments, each of the first A-line conductive member 176, the second A-line conductive member 136, the third A-line conductive member 123, and the fourth A-line conductive member 131 is configured as a copper busbar, and the four A-line conductive members are equipotentially connected. It may be understood that the fastening base 132 is also equipotentially connected to the four A-line conductive members.

As shown in FIG. 3, in some embodiments, the controller 800 further includes a capacitor component 55. The capacitor component 55 includes an insulating base 911. The insulating base 911 is provided with the A-line support position 59, and the A-line support position 59 is adjacent to the first connector 810. In this way, a separate A-line support position may be omitted. This improves an integration level of the controller 800, and reduces costs.

In some embodiments, the first end 176A of the first A-line conductive member is detachably connected to the A-line support position 59. The A-line conductive component 860 has a large span in the housing 10. In some embodiments, the A-line conductive component 860 is at least partially disposed in a capacitor shell 51 (as shown in FIG. 3 to FIG. 5) of the capacitor component 55. For example, the first A-line conductive member 176 is disposed above the capacitor shell 51. The capacitor shell 51 has an insulation property, and is an insulating shell. In this way, the capacitor component 55 can support the A-line conductive component 860. This reduces an insulating support member of the A-line conductive component 860, further improves the integration level of the controller 800, and further reduces costs.

In some embodiments, the first A-line conductive member 176 is attached to the capacitor shell 51 of the capacitor component 55. The A line 801 may be configured for self-heating of the battery pack 600, and boost charging of the battery pack 600. In a self-heating process, a current passing through the A line 801 may reach 500 A, and generate large heat. That is, a large current flows through the first A-line conductive member 176, thereby generating large heat. If heat dissipation is not performed in a timely manner, the capacitor component may be greatly affected, or even the capacitor component 55 may explode.

To resolve a problem that reliability of the capacitor component 55 is low because the first A-line conductive member 176 is disposed on the capacitor component 55, a thermally conductive member 102 is further disposed in the housing 10. The thermally conductive member 102 is disposed between the first A-line conductive member 176 and the inner wall of the housing 10 of the controller 800. For example, the thermally conductive member 102 is configured as thermally conductive paste. The housing 10 of the controller 800 is generally metal, and the metal has good thermal conductivity effect. This allows for efficient dissipation of the heat generated by the first A-line conductive member 176 from the housing 10 in a timely manner.

In some embodiments, the controller 800 further includes an insulating member 91. The insulating member 91 is disposed between the thermally conductive member 102 and the inner wall of the housing 10, and insulates the first A-line conductive member 176 from the housing 10 made of metal.

In some embodiments, as shown in FIG. 8, an upper surface of the insulating member 91 is in contact with a lower surface of an upper cover of the housing 10, a lower surface of the insulating member 91 is in contact with an upper surface of the thermally conductive member 102, and a lower surface of the thermally conductive member 102 is in contact with the A-line conductive component 860 (for example, an upper surface of first A-line conductive member 176).

As shown in FIG. 3, in some embodiments, the insulating member 91 and the thermally conductive member 102 have a same cross-sectional shape. For example, in projection in upper and lower directions, the insulating member 91 and the thermally conductive member 102 have a same shape, and have an approximately same shape as the first A-line conductive member 176. The three members match each other, implementing effective heat dissipation and effective insulation, and saving a material.

The following describes formation of a positive circuit path in the controller 800 during boost charging.

With reference to FIG. 2 and FIG. 3, the positive charging conductor is connected to the second end of the winding 701 through the first contactor 122. A second conductive component 806 is disposed in the controller 800. The second conductive component 806 includes the first contactor 122. A first end of the second conductive component 806 is disposed on the charging socket 115, and is configured to connect to the positive electrode of the charging device. A second end of the second conductive component 806 is connected to the second end of the at least one phase winding 701. In some embodiments, the second end of the second conductive component 806 is connected to the second end of the three-phase winding 701.

A working principle of the first contactor 122 is first described with reference to FIG. 11. The first contactor 122 is provided with a first contact 621 of the contactor, a second contact 622 of the contactor, and a moving plate 624 that connects or disconnects the first contact 621 of the contactor and the second contact 622 of the contactor. Specifically, the contacts 621 and 622 are exposed to a surface of the contactor 122, and respectively extend to an interior of the contactor 122 through respective wiring posts 623A and 623B. A magnet 629 and a coil 628 are spaced apart in a moving direction DM. The coil 628, a connecting shaft 626, and the moving plate 624 are fastened together, and can synchronously move in the moving direction DM. A stopper 627 is a fastening component in the contactor 122, and a spring 625 is connected between the stopper 627 and the moving plate 624. After the contactor 122 is powered on, the coil 628 is energized to generate magnetism, and is attracted by the magnet 629. Therefore, the coil 628 drives, by using the connecting shaft 626, the moving plate 624 to move toward the magnet 629 in the moving direction DM, so that the moving plate 624 is in contact with the wiring posts 623A and 623B, thereby closing the contacts 621 and 622. In this case, the spring 625 is stretched. After power-off, restoring force of the spring 625 pulls the moving plate 624 away from the wiring posts 623A and 623B. As a result, the two contacts 621 and 622 are open, and the coil 628 returns to an original position.

In some embodiments of this application, the moving direction DM of the moving plate 624 of the first contactor 122 is parallel to an axial direction of a wheel axle, or the moving direction of the moving plate 624 is perpendicular to a traveling direction of the vehicle. A benefit of this is that this can prevent the contactor 122 from mistakenly engaging due to inertial force in the case of sudden acceleration, deceleration, or bumpy road conditions during traveling of the vehicle. If the contactor 122 engages, a current between the contactor 122 and the motor 700 is conducted. If the contactor 122 mistakenly engages, the second connection component 4 is electrified, posing a risk of electric shock to a vehicle user.

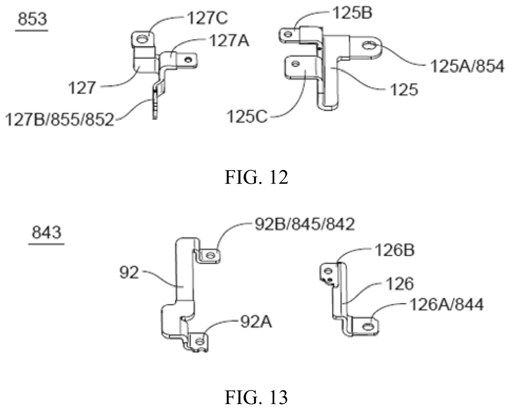

In some embodiments, the second conductive component 806 includes a positive conductive component 850, the first contactor 122, and an additional positive conductive component 865. As shown in FIG. 3 and FIG. 12, the positive conductive component 850 includes a first end 851 of the positive conductive component, and a second end 852 of the positive conductive component. The first end 851 of the positive conductive component is connected to the positive electrode of the charging device, and the second end 852 of the positive conductive component is connected to the first contact 621 of the contactor. As shown in FIG. 3 and FIG. 9, the additional positive conductive component 865 includes a first end 866 of the additional positive conductive component and a second end 867 of the additional positive conductive component. The first end 866 of the additional positive conductive component is connected to the second end of the at least one phase winding 701. The second end 867 of the additional positive conductive component is connected to the second contact 622 of the contactor.

In some embodiments, the positive conductive component 850 includes the charging positive wiring terminal 170 and a sub-positive conductive component 853. The charging positive wiring terminal 170 is disposed in the charging socket 115, is configured to connect to the positive electrode of the charging device, and is the first end 851 of the positive conductive component. The sub-positive conductive component 853 includes a first end 854 of the sub-positive conductive component and a second end 855 of the positive conductive component. The first end 853 of the sub-positive conductive component is connected to the charging positive wiring terminal 170. The second end 855 of the sub-positive conductive component is connected to the first contact 621 of the contactor, and is the second end 852 of the positive conductive component.

As shown in FIG. 12, in some embodiments, the sub-positive conductive component 853 includes a first positive conductive member 125 and a second positive conductive member 127. The first positive conductive member 125 includes a first end 125A of the first positive conductive member and a second end 125B of the first positive conductive member. The first end 125A of the first positive conductive member is the first end 853 of the sub-positive conductive component. The second positive conductive member 127 includes a first end 127A of the second positive conductive member and a second end 127B of the second positive conductive member. The first end 127A of the second positive conductive member is connected to the second end 125A of the first positive conductive member. The second end 127B of the second positive conductive member is the second end 855 of the sub-positive conductive component, namely, the second end 852 of the positive conductive component.

Specifically, the first end 125A of the first positive conductive member is connected to the charging positive wiring terminal 170. In this way, a positive charging current is introduced, and the second end 127B of the second positive conductive member is connected to the first contactor 122.

As shown in FIG. 3 and FIG. 9, the additional positive conductive component 865 includes the first end 866 of the additional positive conductive component, and the second end 867 of the additional positive conductive component. The first end 866 of the additional positive conductive component is connected to the second end of the at least one phase winding 701. The second end 867 of the additional positive conductive component is connected to the second contact 622 of the contactor.

As described above, during boost charging, the positive current path reuses a part of the A line 801. In this application, a path of the A-line conductive component 860 from the second end 862 of the A-line conductive component to the third end 863 of the A-line conductive component forms the additional positive conductive component 865 (that is, the additional positive conductive component 865 forms the path of the A-line conductive component 860 from the second end 862 of the A-line conductive component to the third end 863 of the A-line conductive component). The second end 862 of the A-line conductive component is the first end 866 of the additional positive conductive component. The third end 863 of the A-line conductive component is the second end 867 of the additional positive conductive component. That is, the third A-line conductive member 123, the fourth A-line conductive member 131, the second end 176C of the first A-line conductive member, the second end 176B of the first A-line conductive member, the fastening base 132, and the second A-line conductive member 136 form the additional positive conductive component 865. Alternatively, as shown in FIG. 10, the third A-line conductive member 123, the fourth A-line conductive member 131, the fastening base 132, and the second A-line conductive member 136 form the additional positive conductive component 865.

It will be understood that the third end 863 of the A-line conductive component 860 is connected to the charging positive wiring terminal 170 through the first contactor 122 and the sub-positive conductive component 853.

With reference to FIG. 2 and FIG. 3, the positive charging current is further shunted to the second capacitor 174 before passing through the first contactor 122. Therefore, the second positive conductive member 127 further includes a third end 127C of the second positive conductive member, and the third end 127C of the second positive conductive member is connected to a second capacitor positive second input terminal 72, to connect to the positive electrode of the second capacitor 174.

As shown in FIG. 3, the controller 800 further includes the second switching element 124 and a third positive conductive member 128. Based on a schematic of a principle shown in FIG. 2, when boost charging is not required, the first positive conductive member 125 directs the positive charging current to the second switching element 124. Specifically, the first positive conductive member 125 further includes a third end 125C of the first positive conductive member, and the first end of the second switching element 124 is connected to the third end 125C of the first positive conductive member. The third positive conductive member 128 includes a first end 128A of the third positive conductive member and a second end 128B of the third positive conductive member. The first end 128A of the third positive conductive member is connected to a second end of the second switching element 124, and the second end 128B of the third positive conductive member is configured to at least indirectly connect to the positive electrode of the battery pack 600.

Specifically, the second end 128B of the third positive conductive member is connected to the positive connection terminal 71, and the positive connection terminal 71 is equipotentially connected to the positive direct current bus wiring terminal 58 (for example, the positive connection terminal 71 and the positive direct current bus wiring terminal 58 are terminals of a same copper busbar). Therefore, the second end 128B of the third positive conductive member is connected to the direct current bus wiring terminal 58, and is then connected to the positive electrode of the battery pack 600 through the first connection component 9.

In some embodiments, in the controller 800, a charged negative current trace is arranged in the following manner.

As shown in FIG. 3 and FIG. 13, the controller 800 includes a negative conductive component 840. The negative conductive component 840 includes a first end 841 of the negative conductive component and a second end 842 of the negative conductive component. The first end 841 of the negative conductive component is connected to the negative electrode of the charging device, and the second end 842 of the negative conductive component is at least indirectly connected to the negative electrode of the battery pack 600.

In some embodiments, the negative conductive component 840 includes the charging negative wiring terminal 171 and a sub-negative conductive component 843. The charging negative wiring terminal 171 is disposed in the charging socket 115, and is configured to connect to the negative electrode of the charging device, and is the first end 841 of the negative conductive component. The sub-negative conductive component 843 includes a first end 844 of the sub-negative conductive component and a second end 845 of the sub-negative conductive component, the first end 844 of the sub-negative conductive component is configured to connect to the charging negative wiring terminal 171, and the second end 845 of the sub-negative conductive component is the second end 842 of the negative conductive component.

In some embodiments, the sub-negative conductive component 843 includes a first negative conductive member 126 and a second negative conductive member 92. The first negative conductive member 126 includes a first end 126A of the first negative conductive member and a second end 126B of the first negative conductive member. The first end 126A of the first negative conductive member is a first end 844 of the sub-negative conductive component. The second negative conductive member 92 includes a first end 92A of the second negative conductive member and a second end 92B of the second negative conductive member. The first end 92A of the second negative conductive member is connected to the second end 126B of the first negative conductive member. The second end 92B of the second negative conductive member is the second end 845 of the sub-negative conductive component, namely, the second end 842 of the negative conductive component.

Specifically, the first end 126A of the first negative conductive member is connected to the charging negative wiring terminal 171, to introduce a negative charging current. The second end 92B of the second negative conductive member is connected to the negative direct current bus wiring terminal 60, and is then connected to the negative electrode of the battery pack 600 through the first connection component 9. The first end 92A of the second negative conductive member is connected to the second end 126B of the first negative conductive member through a negative connection terminal 70.

The following describes a connection manner of the power module 83 to the first capacitor 173 and the second capacitor 174.

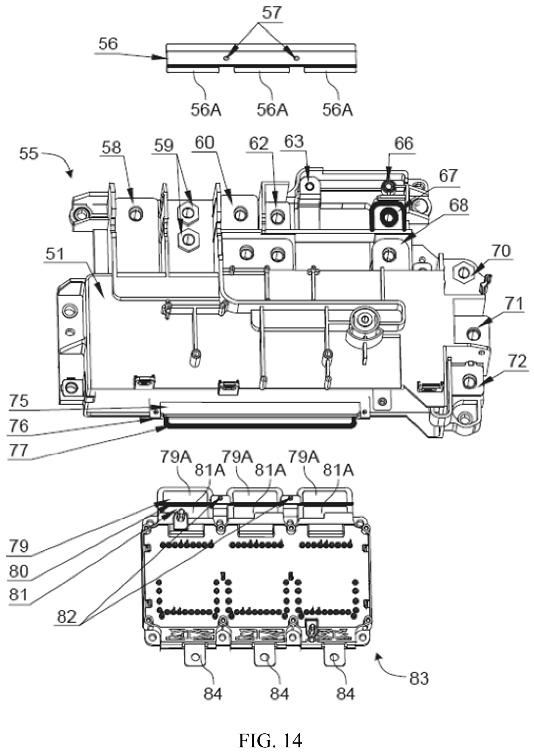

As shown in FIG. 14, the power module 83 includes three-phase wiring terminals 84, a positive wiring terminal of the power module 79, and a negative wiring terminal of the power module 81. The three-phase wiring terminals 84 are configured to separately connect to a first end of a three-phase winding 701. The positive wiring terminal of the power module 79 is configured to at least indirectly connect to the positive electrode of the battery pack 600 (the positive direct current bus 807). The negative wiring terminal of the power module 81 is configured to at least indirectly connect to the negative electrode of the battery pack 600 (the negative direct current bus 808).

The first wiring socket 99 of the controller 800 is connected to the motor wiring socket 146 of the motor 700, to connect the three-phase bridge arm 803 of the power module 83 and the first end of the three-phase winding 701. The three-phase wiring terminal 84 of the power module 83 is connected to the midpoint of the three-phase bridge arm 803 in the power module. In the controller 800, the three-phase wiring terminal 84 is connected to the first wiring socket three-phase wiring terminal 101 (as shown in FIG. 3) of the first wiring socket 99, and is then connected to the three-phase winding 701 through the electrical control three-phase line wiring terminal 147 and the motor three-phase line wiring terminal 145 of the motor wiring socket 146.

As shown in FIG. 3, FIG. 5, and FIG. 14, in some embodiments, the controller 800 further includes a capacitor component 55. The first capacitor 173, the second capacitor 174, the first fuse 134, the second fuse 135, and the third fuse 133 are all disposed in the capacitor component 55. The positive direct current bus support position 58A, the positive direct current bus wiring terminal 58, the A-line support position 59, the negative direct current bus support position 60A, and the negative direct current bus wiring terminal 60 are also disposed in the capacitor component 55. The positive connection terminal 71 and the negative connection terminal 70 are also provided in the capacitor component 55.

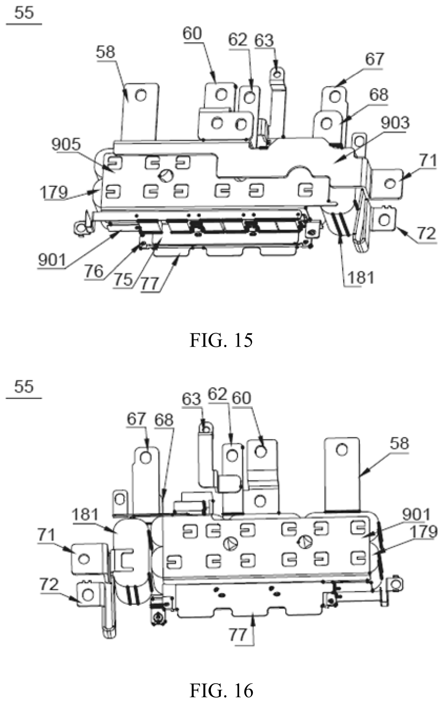

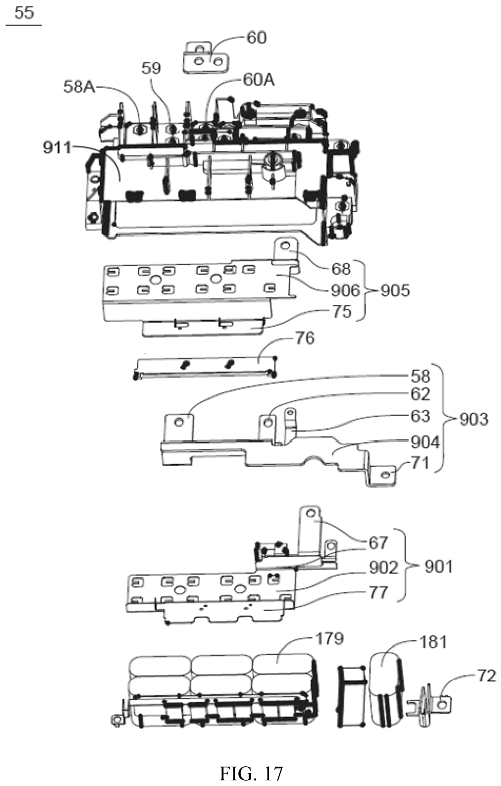

As shown in FIG. 14 to FIG. 17, in some embodiments, the capacitor component 55 includes the insulating base 911 and a first capacitor core 179, and the first capacitor core 179 is mounted to the insulating base 911. The first capacitor core 179 is a core of the first capacitor 173. The insulating base 911 is provided with the A-line support position 59. As described above, the A-line support position is used to support at least the first end 176A of the first A-line conductor section. In some embodiments, the A-line support position 59 is further used for mounting (connecting) to the first A-line wiring terminal 811 of the first connection component 9.

In some embodiments, the capacitor component 55 further includes a second capacitor core 181, the second capacitor core 181 is mounted to the insulating base 911, and the second capacitor core 181 is a core of the second capacitor 174.

In some embodiments, the capacitor component 55 further includes the positive direct current bus support position 58A and the negative direct current bus support position 60A. The positive direct current bus wiring terminal 58 is located at the positive direct current bus support position 58A and is used to connect to the first positive direct current bus wiring terminal 821. The negative direct current bus wiring terminal 60 is located at the positive direct current bus support position 58A and is configured to connect to the first negative direct current bus wiring terminal 831. In some embodiments, the positive direct current bus support position 58A, the A-line support position 59, and the negative direct current bus support position 60A are disposed in parallel, facilitating a connection to the first connection component 9. In some embodiments, the A-line support position 59 is located between the positive direct current bus support position 58A and the negative direct current bus support position 59A. In some embodiments, the A-line support position 59, the positive direct current bus support position 58A, and the negative direct current bus support position 60A are disposed close to the first socket 809 (namely, the first connector 810). This helps improve the integration level of the controller 800.

In some embodiments, the capacitor component 55 further includes a first capacitor positive conductive sheet 901 and a capacitor negative conductive sheet 905.

In some embodiments, the capacitor component 55 further includes a second capacitor positive conductive sheet 903. The second capacitor positive conductive sheet 903 is configured to connect to the first capacitor positive conductive sheet 901. The second capacitor positive conductive sheet 903 includes a second capacitor positive conductive sheet body 904, and the positive direct current bus wiring terminal 58 and a positive connection terminal 71 that extend from the second capacitor positive conductive sheet body 904. Therefore, the entire second capacitor positive conductive sheet 903 is equipotential to the positive direct current bus. As described above, the positive connection terminal 71 is configured to at least indirectly connect to the positive electrode of the charging device. The second capacitor positive conductive sheet body 904 is connected to a positive terminal of the second capacitor core 181.

In some embodiments, the first capacitor positive conductive sheet 901 includes a first capacitor positive input terminal 67, a capacitor positive output terminal 77, and a first capacitor positive conductive sheet body 902 located between the first capacitor positive input terminal 67 and the capacitor positive output terminal 77. The first capacitor positive conductive sheet body 902 is connected to a positive terminal of the first capacitor core 179.

In some embodiments, the second capacitor positive conductive sheet 903 further includes a first fuse wiring terminal 62 connected to the second capacitor positive conductive sheet body 904. A first terminal of the first fuse 134 is connected to the first fuse wiring terminal 62, and a second terminal of the first fuse 134 is connected to the first capacitor positive input terminal 67. Therefore, the positive direct current bus current is introduced from the second capacitor positive conductive sheet 903 and enters the first capacitor 173 after passing through the first fuse 134. In some embodiments, the first fuse wiring terminal 62 and the first capacitor positive input terminal 67 are located on a first side of the first capacitor core 179.

In some embodiments, the second capacitor positive conductive sheet 903 further includes a second fuse wiring terminal 63 connected to the second capacitor positive conductive sheet body 904. A second fuse output terminal 66 is also disposed in the insulating base 911. A first terminal of the second fuse 135 is connected to the second fuse wiring terminal 63, and a second terminal of the second fuse 135 is connected to the second fuse output terminal 66. In some embodiments, the second fuse wiring terminal 63 and the second fuse output terminal 66 are located on the first side of the first capacitor core 179. In some embodiments, the second fuse wiring terminal 63 and the first fuse wiring terminal 62 are located on the first side of the second capacitor positive conductive sheet body 904.

In some embodiments, the capacitor negative conductive sheet 905 includes a capacitor negative input terminal 68, a capacitor negative output terminal 75, and a capacitor negative conductive sheet body 906 located between the capacitor negative input terminal 68 and the capacitor negative output terminal 75. In some embodiments, the capacitor negative conductive sheet body 906 is connected to the negative terminal of the first capacitor core 179 and the negative terminal of the second capacitor core 181, so that the first capacitor 173 and the second capacitor 174 share a negative copper busbar. That is, the negative terminal of the second capacitor core 181 is connected to the negative terminal of the first capacitor core 179. In some embodiments, a first terminal of the third fuse 133 is connected to the negative direct current bus wiring terminal 60, and a second terminal of the third fuse 133 is connected to the capacitor negative input terminal 68. In this case, the negative direct current bus current enters the first capacitor 173 and the second capacitor 174 after passing through the third fuse 133. In some embodiments, the negative direct current bus wiring terminal 60 and the capacitor negative input terminal 68 are located on a same side of the first capacitor core 179.

In some embodiments, the capacitor component 55 further includes the second capacitor positive input terminal 72, and the second capacitor positive input terminal 72 is connected to the positive terminal of the second capacitor core 181. In addition, as described above, the second capacitor positive input terminal 72 is further configured to connect to the first end of the first switching element 122.

In some embodiments, the capacitor negative output terminal 75 and the capacitor positive output terminal 77 are configured to connect to the power module 83. In some embodiments, the capacitor negative output terminal 75 and the capacitor positive output terminal 77 are located on a second side of the first capacitor core 179. In some embodiments, a capacitor insulating member 76 is disposed between the capacitor negative output terminal 75 and the capacitor positive output terminal 77. In some embodiments, the capacitor negative conductive sheet body 906 and the first capacitor positive conductive sheet body 902 are disposed substantially parallel to each other, for example, parallel to a first plane. The capacitor negative output terminal 75 and the capacitor positive output terminal 77 are also disposed parallel to the first plane. The capacitor insulating member 76 is located between the capacitor negative output terminal 75 and the capacitor positive output terminal 77 in a direction perpendicular to the first plane. In some embodiments, the capacitor insulating member 76 is made of a plastic material. For example, the capacitor insulating member 76 is configured as a plastic sheet.

As shown in FIG. 14, in some embodiments, the positive wiring terminal of the power module 79 is configured to connect to the capacitor positive output terminal 77, to connect to the positive direct current bus wiring terminal 58, namely, the positive direct current bus, through the first capacitor positive conductive sheet 901 and the first fuse 134. Therefore, the positive direct current bus wiring terminal 58 is at least indirectly connected to the positive wiring terminal of the power module 79. One end of the first capacitor positive conductive sheet 901 is connected to the positive wiring terminal of the power module 79, and the other end of the first capacitor positive conductive sheet 901 is configured to at least indirectly connect to the positive electrode of the battery pack 600. The negative wiring terminal of the power module 81 is configured to connect to the capacitor negative output terminal 75, to connect to the negative direct current bus wiring terminal 60, namely, the negative direct current bus, through the capacitor negative conductive sheet 905 and the third fuse 133. Therefore, the negative direct current bus wiring terminal 60 is at least indirectly connected to the negative wiring terminal of the power module 79. One end of the capacitor negative conductive sheet 905 is connected to the negative wiring terminal of the power module 81, and the other end of the capacitor negative conductive sheet 905 is configured to at least indirectly connect to the negative electrode of the battery pack 600. In some embodiments, the positive wiring terminal of the power module 79 and the negative wiring terminal of the power module 81 are located on a same side of the power module 83.

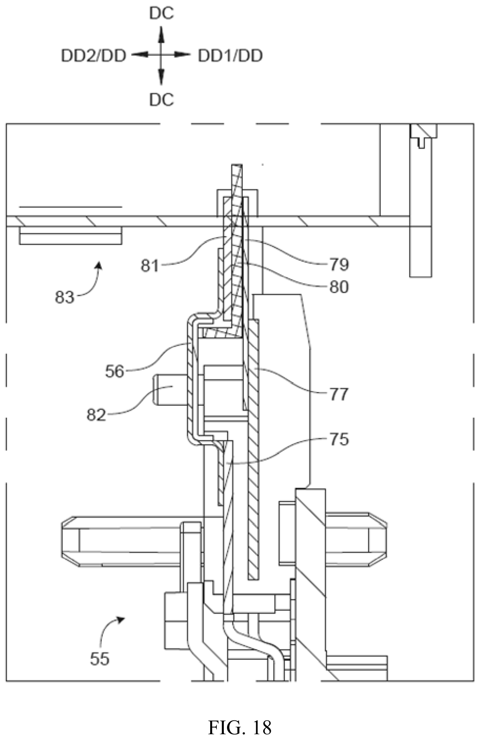

In some embodiments, as shown in FIG. 18, the positive wiring terminal of the power module 79 and the capacitor positive output terminal 77 are stacked and overlapped (in contact) with each other in an overlap direction DD. The overlap direction DD is a direction perpendicular to a contact surface between the positive wiring terminal of the power module 79 and the capacitor positive output terminal 77 (that is, perpendicular to the first plane). In some embodiments, the positive wiring terminal of the power module 79 and the capacitor positive output terminal 77 are stacked and overlapped with each other and welded. The positive wiring terminal of the power module 79 includes three sub-positive wiring terminals of the power module 79A separately connected to a first end (the upper bridge 804) of the three-phase bridge arm 803. The capacitor positive output terminal 77 and the three sub-positive wiring terminals of the power module 79A are all stacked and overlapped, so that the three sub-positive wiring terminals of the power module 79A are connected at an input end.

In some embodiments, as shown in FIG. 14 and FIG. 18, the controller 800 further includes a conductive connection sheet 56. One end of the conductive connection sheet 56 is configured to connect to the negative wiring terminal of the power module 81, and the other end of the conductive connection sheet 56 is configured to connect to the capacitor negative output terminal 75 of the capacitor. Therefore, the negative wiring terminal 81 of the power module is connected to the capacitor negative output terminal 75. For example, the one end of the conductive connection sheet 56 is overlapped with the negative wiring terminal of the power module 81 in the overlap direction DD, and the other end of the conductive connection sheet 56 is overlapped with the capacitor negative output terminal 75 in the overlap direction DD. Similarly, the negative wiring terminal of the power module 81 includes three sub-negative wiring terminals of the power module 81A separately connected to a second end (the lower bridge 805) of the three-phase bridge arm 803. The conductive connection sheet 56 and three sub-negative wiring terminals of the power module 81A are stacked and overlapped. In some embodiments, the one end that is of the conductive connection sheet 56 and that is configured to overlap with the negative wiring terminal of the power module 81 is configured to have three overlap positions 56A spaced from each other, and each overlap position 56A correspondingly overlaps one sub-negative wiring terminal of the power module 81A. In some embodiments, the conductive connection sheet 56 and the negative wiring terminal of the power module 81 are welded, for example, are stacked, overlapped, and welded. The conductive connection sheet 56 and the capacitor negative output terminal 75 are welded, for example, are stacked, overlapped, and welded.

As shown in FIG. 18, the positive wiring terminal of the power module 79 extends beyond (is longer than) the negative wiring terminal of the power module 81 in a staggered direction DC. The capacitor positive output terminal 77 extends beyond (is longer than) the capacitor negative output terminal 75 in the staggered direction DC. The positive wiring terminal of the power module 79 and the capacitor positive output terminal 77 are stacked in the overlap direction DD and are stacked with each other in the staggered direction DC. The staggered direction DC is parallel to the first plane, the overlap direction DD is perpendicular to the staggered direction DC, and the overlap direction DD is perpendicular to the first plane. The overlap direction DD is a bidirectional direction, and includes a first overlap direction DD1 and a second overlap direction DD2 that are opposite to each other. The positive wiring terminal of the power module 79 is located on a side that is of the negative wiring terminal of the power module 81 and that faces the first overlap direction DD1, and is spaced apart from the negative wiring terminal of the power module 81 in the overlap direction DD. The capacitor positive output terminal 77 is located on a side that is of the capacitor negative output terminal 75 and that faces the first overlap direction DD1, and is spaced apart from the capacitor negative output terminal 75 in the overlap direction DD. The conductive connection sheet 56 is stacked and overlapped with the negative wiring terminal of the power module 81 on a side that is of the negative wiring terminal of the power module 81 and that faces the second overlap direction DD2, and is stacked and overlapped with the capacitor negative output terminal 75 on a side that is of the capacitor negative output terminal 75 and that faces the second overlap direction DD2.

In some embodiments, the positive wiring terminal of the power module 79 and the negative wiring terminal of the power module 81 are parallel to each other, for example, are also disposed parallel to the first plane. An insulating member of the power module 80 is disposed between the positive wiring terminal of the power module 79 and the negative wiring terminal of the power module 81. The insulating member of the power module 80 is located between the positive wiring terminal of the power module 79 and the negative wiring terminal of the power module 81 in the overlap direction DD.

In some embodiments, the insulating member of the power module 80 is configured to bend toward the second overlap direction and extend beyond the negative wiring terminal of the power module 81 in the second overlap direction DD2. Similarly, the capacitor insulating member 56 may also be configured to bend toward the second overlap direction and extend beyond the capacitor negative output terminal 75 in the second overlap direction. In some embodiments, an intermediate portion of the conductive connection sheet 56 in the staggered direction DC is configured to be recessed toward the second overlap direction DD2, and two sides (or two ends) of the conductive connection sheet 56 in the staggered direction DC are respectively connected to the negative wiring terminal of the power module 81 and the capacitor negative output terminal 75.

In some embodiments, a first positioning component 82 is disposed in the negative wiring terminal of the power module 81 or the capacitor negative output terminal 75, and a second positioning component 57 is disposed in the conductive connection sheet 56. The first positioning component 82 and the second positioning component 57 are correspondingly disposed and connected. In this case, after the conductive connection sheet 56 is stacked and overlapped with one of the negative wiring terminal of the power module 81 and the capacitor negative output terminal 75 that is provided with the first positioning component 82, the conductive connection sheet 56 is immovable relative to the one of the negative wiring terminal of the power module 81 and the capacitor negative output terminal 75 that is provided with the first positioning component 82 in a direction perpendicular to the overlap direction DD. This can ensure welding accuracy of the conductive connection sheet 56 and the one of the negative wiring terminal of the power module 81 and the capacitor negative output terminal 75 that is provided with the first positioning component 82.

In some embodiments, the housing 10 is correspondingly provided with mounting positions of the power module 83 and the capacitor component 55. Based on a design, after the power module 83 and the capacitor component 55 are mounted in the housing 10, the positive wiring terminal of the power module 79 and the capacitor positive output terminal 77 form a mutually overlapping relative position, and the relative position can be stably maintained under limiting actions of respective mounting positions. In this case, the positive wiring terminal of the power module 79 may be welded to the capacitor positive output terminal 77. Then, the conductive connection sheet 56 is separately welded to the negative wiring terminal of the power module 81 and the capacitor negative output terminal 75. The first positioning component 82 and the second positioning component 57 are configured to allow the conductive connection sheet 56 to maintain a stable relative position relative to the negative wiring terminal of the power module 81 and the capacitor negative output terminal 75, to ensure welding accuracy. In this application, for example, laser welding is used, so that the welding accuracy and safety of a welding process can be improved.

In some embodiments, first positioning components 82 may also be disposed on both the negative wiring terminal of the power module 81 and the capacitor negative output terminal 75. In this case, after the conductive connection sheet 56 is stacked and overlapped with the negative wiring terminal of the power module 81 and the capacitor negative output terminal 75, the conductive connection sheet 56 is immovable relative to a direction perpendicular to an overlap direction of the negative wiring terminal of the power module 81 and the capacitor negative output terminal 75.

In some embodiments, the first positioning component 82 includes at least two first positioning sub-components, the second positioning component 57 includes at least two second positioning sub-components, and the second positioning sub-component and the first positioning sub-component are correspondingly disposed and connected. In this case, the conductive connection sheet 56 is not rotatable relative to the negative wiring terminal of the power module 81 and the capacitor negative output terminal 75. In some embodiments, one of the first positioning component 82 and the second positioning component 57 is disposed as a protrusion, and the other of the first positioning component 82 and the second positioning component 57 is disposed as a groove or a through hole, used to accommodate the protrusion.

A difference between an implementation not shown in this application and the implementation in the figure lies in that the capacitor negative output terminal 75 and the capacitor positive output terminal 77 are disposed oppositely (in reverse), the positive wiring terminal of the power module 79 and the negative wiring terminal of the power module 81 are disposed oppositely (in reverse), the capacitor negative output terminal 75 and the negative wiring terminal of the power module 81 are directly overlapped and welded, and the capacitor positive output terminal 77 is connected to the positive wiring terminal of the power module 79 through the conductive connection sheet 56.

In some embodiments, the power module 83 includes a first power module terminal and a second power module terminal. The first power module terminal is one of the positive wiring terminal of the power module 79 and the negative wiring terminal of the power module 81. The second power module terminal is the other of the positive wiring terminal of the power module 79 and the negative wiring terminal of the power module 81. The first power module terminal is connected to one end of the three-phase bridge arm 803, and the second power module terminal is connected to the other end of the three-phase bridge arm 803. In some embodiments, the first power module terminal and the second power module terminal are located on a same side of the power module 83.

In some embodiments, the capacitor component 55 includes a first capacitor terminal and a second capacitor terminal. The first capacitor terminal is configured to correspond to and connect to the first power module terminal (when the first power module terminal is the positive wiring terminal of the power module 79, the first capacitor terminal is the capacitor positive output terminal 77; when the first power module terminal is the negative wiring terminal of the power module 81, the first capacitor terminal is the capacitor negative output terminal 75). The second capacitor terminal is configured to correspond to and connect to the second power module terminal (when the second power module terminal is the positive wiring terminal of the power module 79, the second capacitor terminal is the capacitor positive output terminal 77; when the second power module terminal is the negative wiring terminal of the power module 81, the second capacitor terminal is the capacitor negative output terminal 75). In some embodiments, the first capacitor terminal and the second capacitor terminal are located on a same side of the capacitor component 55. In some embodiments, the first power module terminal and the first capacitor terminal are directly overlapped and welded, and the second power module terminal and the second capacitor terminal are connected through the conductive connection sheet 56.

In the controller according to this application, the A-line conductive component is disposed in the housing, and connects the second end of the motor winding and the midpoint between the first sub-battery pack and the second sub-battery pack that are connected in series, implementing a heating function of a battery. Further, boost charging is implemented by reusing the motor windings and the part of the A-line conductive component. The controller has an appropriate structure and stable performance. It may be understood that the electric powertrain, the drive system, and the vehicle according to this application include all features and effects of the controller according to this application.

The procedures and steps described in all of the foregoing preferred implementations are merely examples. Unless adverse effect occurs, various processing operations may be performed in an order different from the order of the foregoing procedures. Order addition, combination, or deletion may be performed on the steps of the foregoing procedures according to an actual requirement.

In understanding the scope of this application, the term "include" and its derivatives used in this specification are intended to be open-ended terms that specify presence of features, elements, components, groups, entirety, and/or steps that are described, but do not exclude presence of other features, elements, components, groups, entirety, and/or steps that are not described. This concept also applies to terms having similar meanings, such as the terms "contain", "have", and their derivatives.

The term "attached" or "attaching" used herein includes: a structure in which an element is directly fastened to another element to fasten the element to the another element; a structure in which an element is fastened to an intermediate member, the intermediate member is in turn fastened to another element, to indirectly fasten the element to the another element; and a structure in which one element and another element are integrated, that is, the one element is substantially a part of the another element. This definition also applies to words having similar meanings, such as "connect", "join", "couple", "mount", "bond", "fasten" and their derivatives. Finally, the degree terms such as "substantially," "approximately", and "roughly" used herein represent that an amount of deviation in modifying a term does not significantly change a final result.

Unless otherwise defined, technical and scientific terms used in this specification have same meanings as those usually understood by a person skilled in the art of this application. The terms used in this specification are merely intended to describe specific embodiments, and are not intended to limit this application. A feature described in one implementation in this specification may be applied to another implementation alone or in combination with another feature, unless the feature is not applicable in the another implementation or otherwise specified.

This application is described with the foregoing implementations, but it will be understood that the foregoing implementations are merely for purposes of illustration and description, and are not intended to limit this application to the scope of the described implementations. In addition, a person skilled in the art may understand that, this application is not limited to the foregoing implementations, and more variations and modifications may be made according to teachings of this application, and all these variations and modifications fall within the protection scope claimed in this application.

## Claims

1. A controller (800), wherein the controller (800) comprises:
a housing (10);
a power module (83) disposed in the housing (10), the power module (83) comprising:
three-phase wiring terminals (84) of the power module (83), configured to separately connect to a first end of a three-phase winding (701) of a motor (700),
a positive wiring terminal (79) of the power module (83), configured to at least indirectly connect to a positive electrode of a battery pack (600), and
a negative wiring terminal (81) of power module (83), configured to at least indirectly connect to a negative electrode of the battery pack (600); and
an A-line conductive component (860) disposed in the housing (10), the A-line conductive component (860) comprising a first end (861) of the A-line conductive component and a second end (862) of the A-line conductive component; the first end (861) of the A-line conductive component is configured to at least indirectly connect to a midpoint between a first sub-battery pack (U1) and a second sub-battery pack (U2) that are connected in series in the battery pack (600); and the second end (862) of the A-line conductive component is configured to at least indirectly connect to a second end of at least one phase winding (701) of the motor (700).

2. The controller (800) according to claim 1, wherein the controller (800) further comprises a capacitor component (55), and the capacitor component (55) comprises:
a first capacitor core (179);
a first capacitor positive conductive sheet (901), connected to the first capacitor core (179); and
a capacitor negative conductive sheet (905), connected to the first capacitor core (179),
wherein
one end of the first capacitor positive conductive sheet (901) is connected to the positive wiring terminal of the power module (79), and the other end of the first capacitor positive conductive sheet (901) is configured to at least indirectly connect to the positive electrode of the battery pack (600); and
one end of the capacitor negative conductive sheet (905) is connected to the negative wiring terminal of the power module (81), and the other end of the capacitor negative conductive sheet (905) is configured to at least indirectly connect to the negative electrode of the battery pack (600).

3. The controller (800) according to claim 2, wherein the capacitor component (55) is provided with an A-line support position (59), the A-line support position (59) is connected to the first end (861) of the A-line conductive component, and the first end (861) of the A-line conductive component is configured to connect to the battery pack (600).

4. The controller (800) according to claim 3, wherein the housing (10) comprises a first connector (810), and the A-line support position (59) is disposed adjacent to the first connector (810).

5. The controller (800) according to claim 3, wherein the capacitor component (55) further comprises a capacitor shell (51), the A-line conductive component (860) is at least partially disposed in the capacitor shell (51), and the capacitor shell (51) is an insulating shell.

6. The controller (800) according to claim 5, wherein the controller (800) further comprises a thermally conductive member (102), and the thermally conductive member (102) is disposed between the A-line conductive component (860) and an inner wall of the housing (10) of the controller (800).

7. The controller (800) according to claim 6, further comprising an insulating member (91), wherein the insulating member (91) is disposed between the thermally conductive member (102) and the inner wall of the housing (10).

8. The controller (800) according to claim 7, wherein an upper surface of the insulating member (91) is in contact with a lower surface of an upper cover of the housing (10), a lower surface of the insulating member (91) is in contact with an upper surface of the thermally conductive member (102), and a lower surface of the thermally conductive member (102) is in contact with the A-line conductive component (860).

9. The controller (800) according to claim 8, wherein the A-line conductive component (860) comprises a first A-line conductive member (176) disposed above the capacitor shell (51), and the thermally conductive member (102) is disposed between the first A-line conductive member (176) and the inner wall of the housing (10).

10. The controller (800) according to claim 6, wherein the thermally conductive member (102) is configured as thermally conductive paste.

11. The controller (800) according to claim 1, wherein the housing (10) further comprises a second opening (32), the second end (862) of the A-line conductive component is disposed adjacent to the second opening (32), or the second end (862) of the A-line conductive component is disposed at the second opening (32).

12. The controller (800) according to claim 11, wherein the controller (800) further comprises a first wiring socket (99), the first wiring socket (99) is disposed adjacent to the second opening (32), the first wiring socket (99) comprises a first wiring socket three-phase wiring terminal (101) that is connected to the power module three-phase wiring terminal (84), and
a second end (136B) of a second A-line conductive member is disposed in the first wiring socket (99).

13. The controller (800) according to claim 1, wherein the A-line conductive component (860) comprises:
a first A-line conductive member (176), wherein the first A-line conductive member (176) has a first end (176A) of the first A-line conductive member and a second end (176B) of the first A-line conductive member, and the first end (176A) of the first A-line conductive member is the first end (861) of the A-line conductive component; and
a second A-line conductive member (136), wherein the second A-line conductive member (136) has a first end (136A) of a second A-line conductive member and a second end (136B) of the second A-line conductive member, the first end (136A) of the second A-line conductive member is connected to the second end (176B) of the first A-line conductive member, and the second end (136B) of the second A-line conductive member is the second end (862) of the A-line conductive component.

14. The controller (800) according to claim 13, further comprising a charging socket (115), configured to connect to a charging device, wherein
the A-line conductive component (860) further comprises a third end (863) of the A-line conductive component, and the third end (863) of the A-line conductive component is at least indirectly connected to a positive electrode of the charging device.

15. The controller (800) according to claim 14, wherein the charging socket (115) comprises a charging positive wiring terminal (170) and a charging negative wiring terminal (171);
the charging positive wiring terminal (170) is configured to connect to the positive electrode of the charging device, and the charging negative wiring terminal (171) is configured to connect to a negative electrode of the charging device; and
the third end (863) of the A-line conductive component is configured to at least indirectly connect to the charging positive wiring terminal (170).

16. The controller (800) according to claim 15, wherein the A-line conductive component (860) further comprises a third A-line conductive member (123), and the third A-line conductive member (123) has a first end (123A) of the third A-line conductive member and a second end (123B) of the third A-line conductive member, wherein
the first A-line conductive member (176) further comprises a third end (176C) of the first A-line conductive member, wherein the first end (123A) of the third A-line conductive member is connected to the third end (176C) of the first A-line conductive member, and the second end (123B) of the third A-line conductive member is the third end (863) of the A-line conductive component; or
the first end (123A) of the third A-line conductive member is connected to the first end (136A) of the second A-line conductive member, and the second end (123B) of the third A-line conductive member is the third end (863) of the A-line conductive component.

17. The controller (800) according to claim 16, wherein the A-line conductive component (860) further comprises a fourth A-line conductive member (131), wherein
two ends of the fourth A-line conductive member (131) are respectively connected to the third end (176C) of the first A-line conductive member and the first end (123A) of the third A-line conductive member, to connect the first end (123A) of the third A-line conductive member and the third end (176C) of the first A-line conductive member; or
two ends of the fourth A-line conductive member (131) are respectively connected to the first end (136A) of the second A-line conductive member and the first end (123A) of the third A-line conductive member, to connect the first end (123A) of the third A-line conductive member and the first end (136A) of the second A-line conductive member.

18. The controller (800) according to claim 16, wherein the controller (800) further comprises:
a sub-positive conductive component (843), wherein the sub-positive conductive component comprises a first end (844) of the sub-positive conductive component and a second end (845) of the sub-positive conductive component, the first end (844) of the sub-positive conductive component is connected to the charging positive wiring terminal (170); and
a first switching element (122), wherein a first end of the first switching element (122) is connected to the second end (845) of the sub-positive conductive component, and a second end of the first switching element (122) is connected to the second end (123B) of the third A-line conductive member.

19. The controller (800) according to claim 18, wherein the sub-positive conductive component (843) comprises:
a first positive conductive member (125), wherein the first positive conductive member (125) comprises a first end (125A) of the first positive conductive member and a second end (125B) of the first positive conductive member, wherein the first end (125A) of the first positive conductive member is a first end (844) of the sub-positive conductive component; and
a second positive conductive member (127), wherein the second positive conductive member (127) comprises a first end (127A) of the second positive conductive member and a second end (127B) of the second positive conductive member, wherein the first end (127A) of the second positive conductive member is connected to the second end (125B) of the first positive conductive member, and the second end (127B) of the second positive conductive member is the second end (845) of the sub-positive conductive component.

20. The controller (800) according to claim 19, wherein
the first positive conductive member (125) further comprises a third end (125C) of the first positive conductive member; and
the controller (800) further comprises:
a second switching element (124), wherein a first end of the second switching element (124) is connected to the third end (125C) of the first positive conductive member; and
a third positive conductive member (128), wherein the third positive conductive member (128) comprises a first end (128A) of the third positive conductive member and a second end (128B) of the third positive conductive member, wherein the first end (128A) of the third positive conductive member is connected to a second end of the second switching element (124), and the second end (128B) of the third positive conductive member is configured to at least indirectly connect to the positive electrode of the battery pack (600).

21. The controller (800) according to claim 19, wherein the second positive conductive member (127) further comprises a third end (127C) of the second positive conductive member, and the third end (127C) of the second positive conductive member is connected to a capacitor.

22. The controller (800) according to claim 15, further comprising:
a sub-negative conductive component (843), wherein the sub-negative conductive component (843) comprises a first end (844) of the sub-negative conductive component and a second end (845) of the sub-negative conductive component, the first end (844) of the sub-negative conductive component is connected to the charging negative wiring terminal (171), and the second end (845) of the sub-negative conductive component is configured to at least indirectly connect to the negative electrode of the battery pack (600).

23. The controller (800) according to claim 22, wherein the sub-negative conductive component (843) comprises:
a first negative conductive member (126), wherein the first negative conductive member (126) comprises a first end (126A) of the first negative conductive member and a second end (126) of the first negative conductive member, wherein the first end (126A) of the first negative conductive member is the first end (844) of the sub-negative conductive component; and
a second negative conductive member (92), wherein the second negative conductive member (92) comprises a first end (92A) of the second negative conductive member and a second end (92B) of the second negative conductive member, wherein the first end (92A) of the second negative conductive member is connected to the second end (126) of the first negative conductive member, and the second end (92B) of the second negative conductive member is the second end (845) of the sub-negative conductive component.

24. The controller (800) according to any one of claims 1 to 23, wherein the second end (862) of the A-line conductive component is configured to at least indirectly connect to a second end of the three-phase winding (701) of the motor (700).

25. An electric powertrain (870), comprising:
a motor (700), wherein the motor (700) comprises a three-phase winding (701); and
the controller (800) according to any one of claims 1 to 24, wherein
three-phase wiring terminals (84) of the power module (83) are separately connected to the first end of the three-phase winding (701), and the second end (862) of the A-line conductive component is at least indirectly connected to the second end of the at least one phase winding (701).

26. The electric powertrain (870) according to claim 25, wherein the second end (862) of the A-line conductive component is at least indirectly connected to the second end of the three-phase winding (701).

27. The electric powertrain (870) according to claim 25, wherein
the motor (700) comprises a motor wiring socket (146), wherein the electrode wiring socket (146) comprises a motor A-line wiring terminal (144), an electrical control A-line wiring terminal (148), a motor three-phase line wiring terminal (145), and an electrical control three-phase line wiring terminal (147), the motor A-line wiring terminal (144) is connected to the electrical control A-line wiring terminal (148), and the motor three-phase line wiring terminal (145) is correspondingly connected to the electrical control three-phase line wiring terminal (147), wherein
the motor three-phase line wiring terminal (145) is configured to connect to the first end of the three-phase winding (701), the motor A-line wiring terminal (144) is configured to connect to the second end of the at least one phase winding (701), the electrical control three-phase line wiring terminal (147) is configured to connect to the power module three-phase wiring terminal (84), and the electrical control A-line wiring terminal (148) is configured to at least indirectly connect to the second end (862) of the A-line conductive component.

28. The electric powertrain (870) according to claim 27, wherein the controller (800) further comprises the first wiring socket (99), the first wiring socket (99) comprises the first wiring socket three-phase wiring terminal (101), the first wiring socket three-phase wiring terminal (101) is connected to the electrical control three-phase line wiring terminal (147), and the second end (862) of the A-line conductive component is connected to the electrical control A-line wiring terminal (148) through the first wiring socket (99).

29. A drive system (890), comprising:
a battery pack (600), configured to provide power, the battery pack (600) comprising a first sub-battery pack (U1) and a second sub-battery pack (U2) that are connected in series; and
the electric powertrain (870) according to any one of claims 25 to 28, wherein
the first end (861) of the A-line conductive component is at least indirectly connected to the midpoint between the first sub-battery pack (U1) and the second sub-battery pack (U2) that are connected in series, the positive wiring terminal of the power module (79) is at least indirectly connected to the positive electrode of the battery pack (600), and the negative wiring terminal of the power module (81) is at least indirectly connected to the negative electrode of the battery pack (600).

30. The drive system (890) according to claim 29, further comprising a first connection component (9), configured to connect the battery pack (600) and the controller (800), wherein the first connection component (9) comprises a first A line (801A), wherein one end of the first A line (801A) is configured to connect to the first end (861) of the A-line conductive component, and the other end of the first A line (801A) is configured to connect to the midpoint between the first sub-battery pack (U1) and the second sub-battery pack (U2) that are connected in series.

31. The drive system (890) according to claim 30, wherein
the positive wiring terminal of the power module (79) is configured to at least indirectly connect to the positive electrode of the battery pack (600) through a positive direct current bus (807),
the negative wiring terminal of the power module (81) is configured to at least indirectly connect to the positive electrode of the battery pack (600) through a negative direct current bus (808), and
the first connection component (9) further comprises a part of the positive direct current bus (807) and a part of the negative direct current bus (808), wherein
the first A line (801A) is located between the part of the positive direct current bus (807) and the part of the negative direct current bus (808).

32. The drive system (890) according to claim 31, wherein one end that is of the first A line (801A) and that is configured to connect to the controller (800), and one end that is of the part of the positive direct current bus (807) and that is configured to connect to the controller (800) and one end that is of the part of the negative direct current bus (808) and that is configured to connect to the controller (800) jointly pass through the magnetic ring (93).

33. A vehicle comprising the drive system (890) according to any one of claims 29 to 32, wherein the motor (700) is connected to a wheel of the vehicle.
